(19) Europäisches Patentamt
European Patent Office
Office européen des brevets

(11) **EP 2 535 102 A1**

(12) **EUROPEAN PATENT APPLICATION**
published in accordance with Art. 153(4) EPC

(43) Date of publication:
**19.12.2012 Bulletin 2012/51**

(51) Int Cl.:
**B01D 53/94** (2006.01)      **B01J 29/76** (2006.01)
**F01N 3/08** (2006.01)      **F01N 3/10** (2006.01)
**F01N 3/28** (2006.01)

(21) Application number: **11800521.4**

(22) Date of filing: **17.05.2011**

(86) International application number:
**PCT/JP2011/061256**

(87) International publication number:
**WO 2012/002052 (05.01.2012 Gazette 2012/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2010 JP 2010149534**

(71) Applicant: **N.E. Chemcat Corporation Tokyo 105-6124 (JP)**

(72) Inventors:
• **ANDO, Ryuji**
  **Numazu-shi**
  **Shizuoka 410-0314 (JP)**

• **KANNO, Yasuharu**
  **Numazu-shi**
  **Shizuoka 410-0314 (JP)**
• **NAGATA, Makoto**
  **Numazu-shi**
  **Shizuoka 410-0314 (JP)**

(74) Representative: **Müller-Boré & Partner Patentanwälte Grafinger Straße 2 81671 München (DE)**

(54) **FLUE GAS-CLEANING DEVICE AND FLUE GAS-CLEANING METHOD THAT USE SELECTIVE CATALYTIC REDUCTION CATALYST**

(57)      An exhaust gas purification catalyst apparatus using a selective reduction-type catalystwhichiscapable ofeffectively purifying a nitrogen oxide even at low temperature, as well as suppressing leakage of ammonia, in technology for purifying a nitrogen oxide contained in exhaust gas discharged from a lean burn engine such as a diesel engine, with ammonia and the selective reduction catalyst, and a method for exhaust gas purification. An exhaust gas purification catalyst apparatus arranged with a spraying means of a reducing agent selected from ammonia or urea, and two selective reduction-type catalysts (SROC) in series, in a flow passage of exhaust gas of a lean burn engine, to oxidize nitrogen monoxide (NO) in exhaust gas, as well as to reduce a nitrogen oxide by the reducing agent which is sprayed in exhaust gas, to oxidize excess ammonia, characterized in that: the selective reduction-type catalyst (SROC) has a lower catalyst layer (A) and an upper catalyst layer (B) at the surface of an integral structure-type carrier (C), wherein the lower catalyst layer (A) contains the following components (i) a noble metal component, component (ii) alumina, titania, silica, zirconia, tungsten oxide, a transition metal oxide, a rare earth oxide, and a complex oxide thereof, and component (iii) zeolite; on the other hand, the upper catalyst layer (B) does not substantially contain the following component (i) and contains the following component (iii); the component (i) of the lower catalyst layer (A1) of the selective reduction-type catalyst (SROC1) at the forward stage contains a platinum component in an amount of 90% by weight or more in metal equivalent; and the component (i) of the lower catalyst layer (A2) of the selective reduction-type catalyst (SROC2) at the backward stage contains a palladium component in an amount of 40% by weight or more in metal equivalent; or the like.

Fig.1

Reducing agent spraying site

Exhaust gas stream

Upper layer B(1)

Lower layer A(1)

Integral structure-type carrier (C)

SROC1

Upper layer B(2)

Lower layer A(2)

Integral structure-type carrier (C)

SROC2

**Description**

TECHNICAL FIELD

The present invention relates to an exhaust gas purification catalyst apparatus using a selective reduction-type catalyst and an exhaust gas purification method, and in more detail, the present invention relates to an exhaust gas purification catalyst apparatus using a selective reduction-type catalyst which is capable of effectively purifying a nitrogen oxide even at low temperature, as well as suppressing leakage of ammonia, in technology for purifying a nitrogen oxide contained in exhaust gas discharged from a lean burn engine such as a diesel engine, with ammonia and the selective reduction catalyst, and a method for exhaust gas purification.

BACKGROUND ART

Exhaust gas discharged from a lean burn engine such as a boiler, a lean burn-type gasoline engine, a diesel engine, contains various harmful substances derived from fuel or combustion air, corresponding to a structure and type of a combustion engine. Such harmful substances include a hydrocarbon (HC), a Soluble Organic Fraction (it may also be referred to as SOF), soot, carbon monoxide (CO), a nitrogen oxide ($NO_x$) and the like, which are regulated by the Air Pollution Control Law. In addition, as a purification method therefor, a contact treatment method for purifying exhaust gas by making contact exhaust gas to a catalyst, has been practically used.

In addition, in such a lean burn engine, combustion temperature is controlled by operation to supply air in an amount optimal to combustion in response to kind or supply amount of fuel, to suppress generation amount of harmful substances. However, air and fuel cannot necessarily be controlled in an ideal state in all combustion apparatuses, and there may be the case where a large quantity of harmful substances such as a nitrogen oxide is generated by incomplete combustion. Such situation is similar also in an internal combustion engine, and in the case of a diesel engine, because of having a structure for operating an engine by lean combustion, a nitrogen oxide is easily discharged. Among them, in the case of a diesel engine to be mounted on an automobile, due to always changing operation condition thereof, it was particularly difficult to suitably suppress generation of the harmful substances.

As a means for purifying (denitrification) $NO_x$ among the harmful substances discharged in this way, technology for reductive denitrification by making $NO_x$ contacted with a catalyst having titanium oxide, vanadium oxide, zeolite or the like, as a main component, under the presence of ammonia ($NH_3$) component, has been investigated. A catalyst to be used for this purpose has been known as a selective reduction catalyst (Selective Catalytic Reduction; hereafter may be called SCR).

In this SCR, where the $NH_3$ component is used as a reducing agent, $NO_x$ is finally reduced to $N_2$ mainly by the following reaction formulae (1) to (3):

$$4NO + 4NH_3 + O_2 \rightarrow 4N_2 + 6H_2O \qquad (1)$$

$$2NO_2 + 4NH_3 + O_2 \rightarrow 3N_2 + 6H_2O \qquad (2)$$

$$NO + NO_2 + 2NH_3 \rightarrow 2N_2 + 3H_2O \qquad (3)$$

In such a denitrification catalyst system utilizing such reaction mechanism, gasified $NH_3$ may be used as the reducing component, however, because $NH_3$ itself has harmful property such as emitting irritating odor, there has been proposed a system for adding urea water, as the $NH_3$ component, then generating $NH_3$ by pyrolysis or hydrolysis, and having this contacted to the denitrification catalyst, as a reducing agent, to express denitrification performance by the above reaction formulae.

Steps for obtaining $NH_3$ by decomposition of urea in this way are represented by reaction formulae as follows:

$$NH_2\text{-}CO\text{-}NH_2 \rightarrow NH_3 + HCNO \qquad \text{(pyrolysis of urea)}$$

$$HCNO + H_2O \rightarrow NH_3 + CO_2 \qquad \text{(hydrolysis of isocyanic acid)}$$

$$NH_2\text{-}CO\text{-}NH_2 + H_2O \rightarrow 2NH_3 + CO_2 \qquad \text{(hydrolysis of urea)}$$

In purification of $NO_x$ in exhaust gas, it is enough that $NH_3/NO_x$ molar ratio is 1.0 theoretically, in the above denitrification reaction formulae (1) to (3), however, in the case of transitional engine operation condition in operation of a diesel engine, or in the case where space velocity or gas temperature is not suitable, there may be the case where $NH_3/NO_x$ ratio of $NH_3$ to be supplied cannot avoid increasing, to obtain sufficient purification performance of $NO_x$. In

such a case, unreacted $NH_3$ leaks out (hereafter it may be referred to as slip, or $NH_3$ slip), and risk of incurring secondary pollution such as new environmental contamination or the like has been pointed out.

In consideration of such problems, various catalyst technologies have been investigated as the SCR, in PATENT LITERATURE 1 or the like. In addition, to purify $NH_3$ slipped from the SCR, a purification method has also been investigated for oxidizing slipped $NH_3$ as in the following reaction formula (4), by installing an $NH_3$ purification catalyst, where platinum (Pt), palladium (P), rhodium (Rh) or the like is supported on a base material such as alumina, at the backward stage of the SCR.

$$2NH_3 + 3/2O_2 \rightarrow N_2 + 3H_2O \qquad (4)$$

However, in the catalyst for purifying $NH_3$, because of using a noble metal component such as platinum, palladium, rhodium, having high oxidation performance, as a catalytically active species, there was a problem of incurring newly generation of $NO_x$ component such as $N_2O$, NO, $NO_2$, at the same time as oxidation of $NH_3$, as in the following reaction formulae (5) to (7).

$$2NH_3 + 5/2O_2 \rightarrow 2NO + 3H_2O \qquad (5)$$

$$2NH_3 + 7/2O_2 \rightarrow 2NO_2 + 3H_2O \qquad (6)$$

$$2NH_3 + 2O_2 \rightarrow N_2O + 3H_2O \qquad (7)$$

To suppress generation of such $NO_x$, there has been proposed a purification catalyst having taken countermeasure for slipped $NH_3$, where a component having $NH_3$ oxidative decomposition activity is laminated at the lower layer, and an oxide of at least one and more kinds selected from titanium, tungsten, molybdenum, vanadium not having $NH_3$ oxidation activity is laminated, as a denitrification active component, at the upper layer (refer to PATENT LITERATURE 2). According to this PATENT LITERATURE 2, a catalyst layer having only denitrification activity is formed thinly on the surface layer, firstly a denitrification reaction proceeds at the surface layer thereof, and most of NO and $NH_3$ is utilized in the denitrification reaction. And, residual $NH_3$ and NO diffuse into the catalyst, reaching to a layer (inner layer) inside the catalyst having denitrification activity and oxidation activity. Because of presence of $NH_3$ in large excess relative to NO in the inner layer in this time, the denitrification reaction can be promoted, in addition to oxidative decomposition of $NH_3$ in the inner layer. It is said that only finally excess $NH_3$ is subjected to oxidative decomposition with a noble metal component supported of the inner layer, which is thus capable of suppressing generation of new $NO_x$ caused by purification of the NH3 slipped. The catalyst of this PATENT LITERATURE 2 has used vanadium as an essential component, which has high reaction efficiency and has been conventionally viewed promising as a useful denitrification component. However, vanadium itself is a harmful heavy metal, and because of fear of vaporization into exhaust gas when used as a catalyst, some automotive catalyst makers have avoided use thereof.

In addition, there has been investigated arrangement of a catalyst for purifying $NH_3$ slipped from the SCR at the backward stage of the selective reduction catalyst (SCR) (refer to PATENT LITERATURE 3, PATENT LITERATURE 4). By arranging the $NH_3$ oxidation catalyst in this way, purification of slipped $NH_3$ proceeds, however, it accompanies generation risk of new $NO_x$, because of presence of a highly active noble metal catalyst on the surface of a carrier, and thus it was not able to be said satisfactory to ever strengthening $NO_x$ regulation in recent years.

In addition, against such a problem, it is also considered to increase capacity of the SCR for consuming $NH_3$, so as not to generate new $NO_x$ in purification of slipped NH3, without using vanadium or the like as a catalyst component. A catalytic reaction is promoted in proportion to size of the surface area of a catalyst, however, there is limitation in mounting capacity or arrangement of a catalyst in an automotive application, and thus such a countermeasure as simply increasing catalyst capacity of the SCR cannot be said a practical solution.

In addition, there has been proposed a technology for purifying also a combustible particular component such as a soluble organic component or soot in exhaust gas, in combination with purification of $NO_x$ (PATENT LITERATURE 4). The combustible particular component in exhaust gas is filtered off from exhaust gas using a filter, however, the combustible particular component thus filtered off deposits on the filter and causes clogging of the filter when left as it is. Therefore, the combustible particular component deposited on the filter has been burnt and removed. In such combustion, oxygen or $NO_2$ in exhaust gas is utilized. And, $NO_2$ makes proceed combustion of the combustible particular component, even at low temperature as in exhaust gas of a diesel engine or the like (PATENT LITERATURE 5). However, even in using $NO_2$, because combustion of the combustible particular component is an oxidation reaction, and a large quantity of NO is contained in exhaust gas discharged after combustion, therefore purification means of $NO_x$ is also required here. Accordingly, the SCR is arranged at the backward stage of the filter to perform purification of $NO_x$ at the backward stage of combustion of the combustible particular component by a filter.

In addition, the present applicant has proposed a catalyst which is capable of purifying a nitrogen oxide with ammonia and a selective reduction catalyst and suppressing leakage of ammonia, by using ammonia or urea as a reducing agent, and using the selective reduction-type catalyst (SROC) having oxidation function for purifying a nitrogen oxide in exhaust gas, for exhaust gas of a lean burn engine such as a diesel engine; an exhaust gas purification apparatus using the same; along with an exhaust gas purification method (PATENT LITERATURE 6).

This selective reduction-type catalyst (SROC) isaselective reduction-type catalyst having a lower catalyst layer, with oxidation function of nitrogen monoxide (NO), and an upper catalyst layer, with adsorbing function of ammonia, on the surface of an integral structure-type carrier, where the lower catalyst layer contains a noble metal of a component (a), a transition metal oxide such as alumina of a component (b), and zeolite of a component (c), and on the other hand, the upper catalyst layer does not substantially contain the component (a), and contains the component (c).

In addition, according to this invention, by arranging the selective reduction-type catalyst (SCR) not containing the noble metal component forward the SROC and backward the reducing agent supply site, amount of $NO_x$ generating in purification of $NH_3$ can be suppressed, while purifying the $NH_3$ component slipped out not being used in the SCR. In this invention, by further combining any of the DOC, DPF and CSF, it becomes possible to more efficiently purify $NO_x$, and purification of the fine particular component such as soot is also promoted. However, under recent ever strengthening exhaust gas regulations, it has been required catalyst technology providing further low discharge amount of $NO_x$.

As described above, in conventional $NH_3$—SCR technology, there has been no catalyst system which is capable of suppressing generation of new $NO_x$, and providing sufficient purification performance of $NO_x$ and purification performance of slipped $NH_3$ at the same time, and such a catalyst having these performances in combination has been required earnestly.

CITATION LIST

PATENT LITERATURE

[PATENT LITERATURE 1]: JP-A-2004-524962 (claim 10)
[PATENT LITERATURE 2]: JP-A-10-5591 (claim 1, claim 17, paragraphs 0022, and 0023)
[PATENT LITERATURE 3] : JP-A-2005-238195 (claim 1, paragraphs 0009 and 0061)
[ PATENT LITERATURE 4] : JP-A-2002-502927 (claim 1, paragraph 0013)
[ PATENT LITERATURE 5] : JP No. 3012249
[ PATENT LITERATURE 6] : JP-A-2008-279334

SUMMARY OF THE INVENTION

TECHNICAL PROBLEM

It is an object of the present invention, in view of the above conventional technological problems, to provide an exhaust gas purification catalyst apparatus using a selective reduction-type catalyst which is capable of effectively purifying a nitrogen oxide even at low temperature, as well as suppressing leakage of ammonia, in purification technology of a nitrogen oxide contained in exhaust gas discharged from a lean burn engine such as a diesel engine, with ammonia and the selective reduction catalyst, and a method for exhaust gas purification) .

SOLUTION TO PROBLEM

The present inventors have intensively studied a way to solve the above-described problems, and confirmed that, in a catalyst apparatus arranged with a spraying means of a reducing agent selected from ammonia or urea, and two selective reduction-type catalysts (SROC), coated with a lower layer containing a noble metal component and zeolite, and an upper layer not containing the noble metal component but contains zeolite, in series, on an integral structure-type carrier, in a flow passage of exhaust gas of a lean burn engine, in such a manner that the selective reduction-type catalyst (SROC1) of the forward stage contains a platinum component in an amount of 90% by weight or more in metal equivalent, in the noble metal component of the lower layer, and the selective reduction-type catalyst (SROC2) of the backward stage contains a palladium component, in an amount of 40% by weight or more inmetal equivalent, in the noble metal component of the lower layer, $NO_x$ can also be purified even from relatively low temperature, where catalytic activity is difficult to obtain, and generation of $NO_x$ accompanied with purification of $NH_3$ slipped can be suppressed, and have thus completed the present invention.

That is, according to a first aspect of the present invention, there is provided an exhaust gas purification catalyst apparatus arranged with a spraying means of a reducing agent selected from ammonia or urea, and two selective reduction-type catalysts (SROC) in series, in a flow passage of exhaust gas of a lean burn engine, to oxidize nitrogen monoxide (NO) in exhaust gas, as well as to reduce a nitrogen oxide with the reducing agent which is sprayed in exhaust gas, to oxidize excess ammonia, characterized in that: the selective reduction-type catalyst (SROC) has a lower catalyst layer (A) or an upper catalyst layer (B) on the surface of an integral structure-type carrier (C), where the lower catalyst layer (A) contains the following components (i), (ii) and (iii), and on the other hand, the upper catalyst layer (B) does not substantially contain the following component (i), and contains the following component (iii); the component (i) of the lower catalyst layer (A1) of the selective reduction-type catalyst (SROC1) at the forward stage contains a platinum component in an amount of 90% by weight or more in metal equivalent, and the component (i) of the lower catalyst layer (A2) of the selective reduction-type catalyst (SROC2) at the backward stage contains a palladium component in an amount of 40% by weight or more in metal equivalent.

(i) a noble metal component: one or more kinds selected from the platinum component and the palladium component,
(ii) one or more kinds selected from alumina, titania, silica, zirconia, tungsten oxide, a transition metal oxide, a rare earth oxide, and a complex oxide thereof,
(iii) zeolite.

In addition, according to a second aspect of the present invention, there is provided the exhaust gas purification catalyst apparatus, characterized in that, in the first aspect, in the lower catalyst layer (A1) or (A2), content of the component (i) is 0.05 to 3 g/L per unit volume of the integral structure-type carrier (C).

In addition, according to a third aspect of the present invention, there is provided the exhaust gas purification catalyst apparatus, characterized in that, in the first or the second aspect, in the lower catalyst layer (A1) or (A2), content of the component (ii) is 5 to 120 g/L per unit volume of the integral structure-type carrier (C).

In addition, according to a fourth aspect of the present invention, there is provided the exhaust gas purification catalyst apparatus, characterized in that in any one of the first to the third aspects, the component (iii) in the lower catalyst layer (A) or the upper catalyst layer (B) contains β-type zeolite.

In addition, according to a fifth aspect of the present invention, there is provided the exhaust gas purification catalyst apparatus, characterized in that, in any one of the first to the fourth aspects, the component (iii) in the lower catalyst layer (A) or the upper catalyst layer (B) contains at least one kind of an iron component or a cerium component.

In addition, according to a sixth aspect of the present invention, there is provided the exhaust gas purification catalyst apparatus, characterized in that, in any one of the first to the fifth aspects, in the lower catalyst layer (A1), content of the component (iii) is 5 to 80 g/L per unit volume of the integral structure-type carrier (C).

In addition, according to a seventh aspect of the present invention, there is provided the exhaust gas purification catalyst apparatus, characterized in that, in any one of the first to the sixth aspects, thickness of the lower catalyst layer (A) or the upper catalyst layer (B) is both substantially in a range of 5 to 200 $\mu$m.

In addition, according to an eighth aspect of the present invention, there is provided the exhaust gas purification catalyst apparatus, characterized in that, in any one of the first to the seventh aspects, the lower catalyst layer (A) is coated on the integral structure-type carrier (C), and further just thereon the upper catalyst layer (B) is coated so as to be the outermost surface layer to directly contact to the flow passage of exhaust gas.

In addition, according to a ninth aspect of the present invention, there is provided the exhaust gas purification catalyst apparatus, characterized in that, in any one of the first to the eighth aspects, content of the component (iii) in the upper catalyst layer (B) is 10 to 160 g/L per unit volume of the integral structure-type carrier (C).

In addition, according to a tenth aspect of the present invention, there is provided the exhaust gas purification catalyst apparatus, further arranged with an oxidation catalyst (DOC) having oxidation function of nitrogen monoxide and a hydrocarbon in the flow passage of exhaust gas, characterized in that, in any one of the first to the ninth aspects, a spraying means for supplying an aqueous solution of urea or an aqueous solution of ammonia is arranged at the downstream of the oxidation catalyst (DOC) and the upstream side of the selective reduction-type catalyst (SROC1).

In addition, according to an eleventh aspect of the present invention, there is provided the exhaust gas purification catalyst apparatus, characterized in that, in the tenth aspect, a selective reduction catalyst (SCR) substantially not having an oxidation function layer is further arranged at the upstream of the selective reduction-type catalyst (SROC1) and the downstream of the spraying means.

In addition, according to a twelfth aspect of the present invention, there is provided the exhaust gas purification catalyst apparatus, characterized in that, in the eleventh aspect, a filter (DPF, CSF) for removing a combustible particular component is further arranged at the upstream of the selective reduction catalyst (SCR) and the downstream of the oxidation catalyst (DOC).

On the other hand, according to a thirteenth aspect of the present invention, there is provided a method for exhaust gas purification, characterized by making pass through exhaust gas discharged from a lean burn engine to the oxidation catalyst (DOC), converting nitrogen monoxide in exhaust gas to nitrogen dioxide, then spraying supplying an aqueous solution of urea or an ammonia component, and making pass through the selective reduction-type catalyst (SROC1, SROC2) to reduction purify a nitrogen oxide in exhaust gas, using the exhaust gas purification catalyst apparatus in the tenth aspect.

In addition, according to a fourteenth aspect of the present invention, there is provided a method for exhaust gas purification, characterized by making pass through exhaust gas discharged from a lean burn engine to the oxidation catalyst (DOC), converting nitrogen monoxide in exhaust gas to nitrogen dioxide, then spraying supplying an aqueous solution of urea or an ammonia component, and making pass through the selective reduction catalyst (SCR) to reduce a nitrogen oxide in exhaust gas, and further, by making pass through the selective reduction-type catalyst (SROC1, SROC2) to oxidation purify excess ammonia in exhaust gas, by using the exhaust gas purification catalyst apparatus in the eleventh aspect.

In addition, according to a fifteenth aspect of the present invention, there is provided a method for exhaust gas purification, characterized by making pass through exhaust gas discharged from a lean burn engine to the oxidation catalyst (DOC), converting nitrogen monoxide in exhaust gas to nitrogen dioxide, removing the combustible particular component using a filter (DPF, CSF), then spraying supplying an aqueous solution of urea or an ammonia component, and making pass through the selective reduction catalyst (SCR) to reduce a nitrogen oxide in exhaust gas, and further, by making pass through the selective reduction-type catalyst (SROC1, SROC2) to oxidation purify excess ammonia in exhaust gas, by using the exhaust gas purification catalyst apparatus in the twelfth aspect.

ADVANTAGEOUS EFFECTS OF INVENTION

According to the present invention, because two selective reduction-type catalysts (SROC) having an oxidation function layer are used, and kind and content of the noble metal component in the lower layer thereof are optimized, superior purification performance by the $NH_3$ component of a reducing agent can be obtained for $NO_x$ in exhaust gas discharged from various lean burn engines, as well as slipped $NH_3$ can be purified in high efficiency, and generation of new $NO_x$ accompanying with oxidation of $NH_3$ can be suppressed, thus superior purification performance of $NO_x$ and purification performance of $NH_3$ can be obtained even at low temperature of exhaust gas. In addition, safety is high, because of no containing a harmful heavy metal such as vanadium, as a catalyst component.

In addition, by arrangement of the oxidation catalyst (DOC) for oxidizing NO to $NO_2$, at the forward stage of these two selective reduction-type catalysts (SROC), it becomes possible to further enhance purification performance of $NO_x$. Further, by combining the oxidation catalyst (DOC) and the filter (DPF), it becomes possible to combust the combustible particular component deposited on the DPF to reproduce the DPF, as well as purify NO generated from the DPF, $NO_x$ passed through the DPF and slipped $NH_3$.

BRIEF DESCRIPTION OF DRAWINGS

Fig. 1 is an explanation drawing showing a layer configuration of each selective reduction-type catalyst (SROC), in an exhaust gas purification catalyst apparatus of the present invention.

Fig. 2 is an explanation drawing of the exhaust gas purification catalyst apparatus of the present invention, where an oxidation catalyst (DOC) and a reducing agent (urea) spraying means are arranged forward a selective reduction-type catalyst (SROC).

Fig. 3 is an explanation drawing of an exhaust gas purification catalyst apparatus of the present invention, where a selective reduction catalyst (SCR) is arranged at the forward stage of a selective reduction-type catalyst (SROC), and an oxidation catalyst (DOC) and a reducing agent (urea) spraying means are arranged forward thereof.

Fig. 4 is a schematic drawing representing a fundamental configuration of a selective reduction-type catalyst (SROC) to be used in the present invention, and a reaction route to be estimated.

Fig. 5 is a graph for comparing with a catalyst for comparison, by measuring catalyst performance (generation amount of $N_2$) by spraying urea at 500°C, using the exhaust gas purification catalyst apparatus of the present invention, shown in Fig. 3.

Fig. 6 is a graph for comparing with a catalyst for comparison, by measuring catalyst performance (generation amount of $N_2$) by spraying urea at 400°C, using the exhaust gas purification catalyst apparatus of the present invention, shown in Fig. 3.

Fig. 7 is a graph for comparing with a catalyst for comparison, by measuring catalyst performance (generation amount of $N_2$) by spraying urea at 300°C, using the exhaust gas purification catalyst apparatus of the present invention, shown in Fig. 3.

DESCRIPTION OF EMBODIMENTS

Explanation will be given below in detail on the exhaust gas purification catalyst apparatus using the selective reduction-type catalyst of the present invention, and the exhaust gas purification method, using the case of applying to an automotive diesel engine, as an example, with reference to drawings. However, the present invention should not be limited to an automotive application, and is applicable widely to removal technology of a nitrogen oxide in exhaust gas, and also purification of slipped NH3. In addition, fuel to be used in a combustion engine may be, other than light oil, starting from gasoline, heavy oil, and also bio-fuel such as alcohol, or mixed fuel of bio-fuel and light oil, or bio-fuel and gasoline. The present invention is applicable to an exhaust gas purification catalyst apparatus incorporated with a filter for removing the combustible particular component, and exerts superior effect by combusting the deposited combustible particular component and reproducing the filter.

1. [The selective reduction-type catalyst (SROC)]

In the exhaust gas purification catalyst apparatus of the present invention, the selective reduction-type catalyst to be used is a selective reduction catalyst (hereafter may be called Selective Reduction OXIDATION CATALYST or SROC) having an oxidation function layer, and uses ammonia or urea as the reducing agent, and has the function to purify a nitrogen oxide in exhaust gas discharged from a lean burn engine.

This selective reduction-type catalyst (SROC) has a lower catalyst layer (A) having oxidation function of nitrogen monoxide (NO) in exhaust gas, and an upper catalyst layer (B) having adsorbing function of ammonia, on the surface of an integral structure-type carrier (C), and is arranged in series, as the selective reduction-type catalyst (SROC1) of the forward stage and the selective reduction-type catalyst (SROC2) of the backward stage, in a flow passage of exhaust gas.

That is, the selective reduction-type catalyst (SROC) has the lower catalyst layer (A) or the upper catalyst layer (B) on the surface of the integral structure-type carrier (C), wherein the lower catalyst layer (A) contains the following components (i), (ii) and (iii), and on the other hand, the upper catalyst layer (B) does not substantially contain the following component (i), and contains the following component (iii); and the component (i) of the selective reduction-type catalyst (SROC1) at the forward stage contains a platinum component in an amount of 90% by weight or more in metal equivalent, and the component (i) of the selective reduction-type catalyst (SROC2) at the backward stage contains a palladium component in an amount of 40% by weight or more in metal equivalent.

(i) a noble metal component: one or more kinds selected from the platinum component and the palladium component,
(ii) one or more kinds selected from alumina, titania, silica, zirconia, tungsten oxide, a transition metal oxide, a rare earth oxide, and a complex oxide thereof,
(iii) zeolite.

(A) The lower catalyst layer

In the present invention, the lower catalyst layer (A) of the selective reduction-type catalyst (SROC) contains, as essential component, the component (i) a noble metal component: one or more kinds selected from the platinum component and the palladium component, and can contain rhodium. Platinum and palladium have high oxidation activity and exert superior $NH_3$ purification performance.

In the case where the lower catalyst layer component is coated on the integral structure-type carrier (C), use amount of the noble metal component in the lower catalyst layer (A) is preferably 0.05 to 3 g/L of platinum and palladium, per unit volume of the integral structure-type carrier, and more preferably 0.1 to 2 g/L. The amount below 0.05 g/L cannot sufficiently utilize activity of platinum along with palladium, while even the amount over 3 g/L cannot expect enhancement of more effect than that.

In the case where the platinum component is contained in an amount of 90% by weight or more in metal equivalent, as the noble metal component in the lower catalyst layer (A1) in the selective reduction-type catalyst (SROC1) of the forward stage to be used in the present invention, certain effect can be expected. Preferable content of the platinum component is 95% by weight or more, more preferably 98% by weight or more, and further preferably the noble metal component is all platinum components. In addition, the noble metal component other than platinum to be contained in the lower catalyst layer (A1) is the palladium component or rhodium, and it is more preferable to be the palladium component.

In addition, in the case where the palladium component is contained in an amount of 40% by weight or more in metal equivalent, as the noble metal component in the lower catalyst layer (A2) in the selective reduction-type catalyst (SROC2) of the backward stage to be used in the present invention, certain effect can be expected. Preferable content of the palladium component is 45% by weight or more, more preferably 50% by weight or more, and further preferably 75% by weight or more. In addition, the noble metal component other than palladium contained in the lower catalyst layer (A2) is the platinum component or rhodium, and it is more preferable to be the platinum component.

Pt and Pd, which are catalyst components of the lower catalyst layer (A), have been known as activated species exerting superior oxidation performance, and such activated species increase active surface by maintaining specific surface area high in the catalyst, and are capable of exerting high activity.

Therefore, the noble metal component (i) of the present invention is supported on at least one kind of a transition metal oxide such as alumina, titania, silica, zirconia, tungsten oxide; a rare earth oxide such as cerium oxide, lanthanum oxide, or a complex oxide thereof, that is, the component (ii), as a base material. It should be noted that these base materials are capable of supporting a noble metal in high dispersion, when they are fine particles, as well as make sintering of the catalyst component (i) difficult, due to having high heat resistance, and is capable of maintaining high dispersion of the noble metal in usage, for a long period of time.

Thus, a noble metal component is supported in high dispersion on an inorganic base material having high specific surface area value and superior heat resistance, however, such an inorganic base material as above has been described in, for example, JP-A-2006-21141 (claim 5, paragraph 0019), and has been used conventionally. Among them, in the present invention, it is preferable to use titania or a complex oxide of titania and other inorganic oxide. As the complex oxide of titania and other inorganic oxide, titania-silica, titania-alumina and titania-tungsten can be used. Such a titania-containing complex oxide is expected to enhance denitrification performance, heat resistance, sulfur poisoning resistance performance, and activity at a low temperature of 200°C or lower, or the like. It should be noted that, as for enhancement of sulfur poisoning resistance performance, a complex oxide of silica-alumina is also a preferable material, other than the titania-containing complex oxide, in addition, as for enhancement of heat resistance, y-alumina can also be said to be a preferable base material.

It is preferable that such an inorganic base material, from a viewpoint of dispersibility of a noble metal component, has a specific surface area (by the BET method, and the same hereafter) of 30 $m^2$/g or higher, and further preferably 90 $m^2$/g or higher. The specific surface area of 30 $m^2$/g or higher is capable of supporting a noble metal stably in a highly dispersed state.

A method for supporting a noble metal on such an inorganic base material can be performed by a known method as appropriate for mixing an aqueous solution of various types of salts of platinum and palladium with an inorganic base material, drying and firing them or the like. As such a salt, in the case of platinum, chloroplatinic(IV) acid, diammine platinum(III) nitrite or platinic acid amine hydroxide, chloroplatinic acid or the like can be used, and in the case of palladium, dinitrodiammine palladium, palladium nitrate, palladium chloride, rhodium(IV) chloride, or rhodium(IV) nitrate can be used.

In addition, in the lower layer tobe coated on a integral-type catalyst carrier, one kind of a transition metal oxide such as titania, zirconia, tungsten oxide; a rare earth oxide such as ceria, lanthanum, praseodymium, samarium, gadolinium, neodymium; a base metal oxide such as gallium oxide, tin oxide; or a complex oxide thereof, or the like, can be added as a promoter component, apart from the above base material. The complex oxide containing titania, tungsten oxide, zirconia has solid acid, and not only exhibits selective reduction activity by $NH_3$ exerts but also action for promoting pyrolysis or hydrolysis at low temperature, for urea as the $NH_3$ component. Action of tin oxide, other transition metal oxides and rare-earth metal oxides may not be clear, however, it is considered that by contributing to adsorption and oxidation of $NO_x$, catalytic performance of the present invention is enhanced.

As such a promoter component, the cerium compound is preferable, and is usually used as an oxide, which may be a pure cerium oxide, however, it may be a complex oxide with cerium and a transition metal such as zirconium; a complex oxide with cerium and aluminum; a complex oxide with cerium and a rare earth such as lanthanum, praseodymium, samarium, gadolinium, neodymium, or a transition metal such as iron, nickel, cobalt.

Reason for effectiveness of a cerium compound as a promoter component in the $NO_x$ purification catalyst is not clear, however, the cerium compound has been known as An Oxygen Storage Component (it may be referred to as OSC), and it is considered that by using such an OSC as the selective reduction-type catalyst of the present invention, $NO_x$ is adsorbed by storage capability of oxygen, which the OSC has, and chance of contacting with other catalyst components increases and thus a reaction is promoted.

In addition, it is considered that, the cerium compound as an oxide and $NO_x$ have relation of acid and base relatively, and also by which $NO_x$ is adsorbed to the OSC, and chance of contacting with other catalyst components increases and thus the reaction is promoted.

In the case of using the promoter, blending amount thereof is preferably 0.1 to 10% by weight (in oxide equivalent), and more preferably 0.5 to 4% by weight, relative to weight of the catalyst composition. The amount of these promoter components over 10% by weight may not expect enhancement of purification performance comparable to the addition amount, while the amount below 0.1% by weight may not enhance also purification performance of exhaust gas.

In both of the lower catalyst layer (A1) and (A2), content of the component (ii) is 5 to 120 g/L per unit volume of the integral structure-type carrier (C), and in particular, it is desirable to be 15 to 100 g/L. Reason for that is because too high content of the component (ii) enhances dispersion property of the Pt component and the Pd component, and increase $NH_3$ oxidation capability too high, thus it may provide the case where emission of $NO_x$ increases, on the contrary, too low content of the base material does not promote oxidation of $NH_3$ and may cause $NH_3$ slip.

In addition, as a catalyst forming this lower layer, various zeolite components (iii) exerting superior denitrification performance by ammonia are used. Kind of zeolite component is not especially limited, and a $\beta$-type, an MFI-type, a CHA-type or the like maybe selectable as appropriate, however, the $\beta$-type, and the MFI-type zeolite having a three-dimensional pore structure are preferable. In particular, $\beta$-zeolite has a relatively complicated three-dimensional pore structure composed of linear pores having relatively large diameter, aligned in one direction, and curved pores crossing with them, and has property that diffusion of cations and gas molecules such as $NH_3$ at ion exchange are superior, and is thus preferable. In addition, instead of such zeolite, as a zeolite analogue, various types of ALPO (aluminaphosphate), or SAPO (silicoaluminophosphate) and the like can be used in the present invention, as a zeolite component. In addition, such a zeolite component (iii) can be used as a material of the SCR to be described later.

Zeolite has an acid point to which a basic compound such as $NH_3$ can adsorb, and number of the acid point differs in response to Si/Al ratio thereof. Generally, zeolite having low Si/Al ratio has more number of the acid point, however, zeolite having low Si/Al ratio has large deterioration degree in durability under the coexistence of steam, while on the contrary, zeolite having high Si/Al ratio is said superior in heat resistance. In a $NH_3$ selective reduction catalyst in the present invention, because $NH_3$ adsorbs at the acid point of zeolite, which becomes an activated point to reductively remove a nitrogen oxide such as $NO_2$, zeolite having more acid points (lower Si/Al ratio) is considered advantageous for a denitrification reaction. In this way, as for the Si/Al ratio, there is trade off relationbetweendurability and activity, and thus in consideration of this point, the Si/Al ratio of zeolite is preferably 5 to 500, more preferably 10 to 100, and further preferably 15 to 50. Such characteristics is also valid similarly in other zeolite of MFI-type or the like, other than the $\beta$-type.

In comparing characteristics of the $\beta$-type and the MFI-type zeolite with that of $NH_3$-SCR, the MFI-type is superior in adsorption capacity, and the $\beta$-type has capability of maintaining $NH_3$ up to higher temperature. In practical use environment of a diesel engine, use of the $\beta$-type and the MFI-type by mixing as the $NH_3$ selective reduction catalyst is capable of responding to transitional change of temperature or change of exhaust gas amount in engine operation, or change of injection amount of the $NH_3$ component, in a wide region. In this case, composition ratio, represented by the $\beta$-type/the MFI-type, is preferably 0.1 to 10, and more preferably 0.2 to 5.

In addition, as a solid acid point of zeolite, a cation is present as a counter ion. As the cation, an ammonium ion or a proton has generally been known. In the present invention, a cation species is not especially limited, and other than an ammonium ion or a proton, a transition metal element such as iron, cupper; a rare earthmetal element such as cerium, lanthanum; and a noble metal element can be used, and among them, Fe element or the cerium element is preferable. Here, the iron element or the cerium element may be used each singly for zeolite, or both of the iron element or the cerium element may be used, or the iron element or the cerium element may be contained over ion-exchanging amount, or separately from the ion-exchanged element, theymaybe contained as an oxide in the zeolite component.

In this way, the iron element or the cerium element may be added in zeolite, and reason for enhancement of performance by zeolite ion-exchanged with the iron element or the cerium element is considered that NO is oxidized to $NO_2$ at the zeolite surface to enhance reaction activity with $NH_3$, and a skeleton structure of zeolite is stabilized to enhance heat resistance. The addition amount of ion-exchanging species to zeolite is preferably 0.01 to 5% by weight, and more preferably 0.2 to 2.0% by weight.

In the present invention, two kinds or more of zeolite may be used, and in using zeolite other than the $\beta$-type, the $\beta$-type zeolite may be combined with one or more kinds of various types of zeolite such as zeolite A, X, Y, MFI, MOR, CHA, or it may be combined with a substance similar to zeolite, such as the SAPO. However, it is preferable that ratio of the $\beta$-type in total zeolite to be contained in the catalyst is 50 to 100%.

$\beta$-Zeolite, which is preferable in the present invention, has a composition represented by the following average composition formula, as a unit cell composition, and is classified as tetragonal synthetic zeolite.

$$M_{m/x}[\,Al_m Si_{(64-m)}O_{128}]\cdot pH_2O$$

(wherein M represents a cation species; x represents valency of the M; m represents number over 0 and below 64; and p represents number of 0 or larger)

In addition, $\beta$-zeolite has a relatively complicated three-dimensional fine pore structure as described above, composed of linear pores having relatively large diameter, aligned in one direction, and curved pores crossing with them, which makes superior diffusion of cations in ion exchange and diffusion of $NH_3$ gas molecules in reduction. This is because, as compared with mordenite, faujasite and the like, which have only linear vacant holes aligned in one direction, $\beta$-zeolite has a unique structure, and this complicated vacant hole structure gives high stability of little structural fracture caused by heat.

An ion exchanged ratio by the iron element to $\beta$-type zeolite is preferably expressed by the following formula (1), based on the fact that one iron element (ion) and the above two $[AlO_{4/2}]$ units, which is a mono-valent ion-exchange site in zeolite, form an ion pair:

```
[ Mol number of an iron ion to be contained by ion-exchange,in unit weight of zeolite/{ (mol number of Al₂O₃ present in unit

    weight of zeolite)×(1/2)}]×100 --- (1)
```

In addition, the ion exchange rate thereof is preferably 10 to 100%, more preferably 12 to 92%, further preferably 15 to 80% and most preferably 30 to 70%. The ion exchange ratio of 92% or lower more stabilizes a skeleton structure of zeolite, enhances heat resistance of the catalyst, and hence life-time of the catalyst, thus can provide more stable catalytic activity. The ion exchange rate is preferably 80% or lower, and further preferably 70% or lower. However, the too low ion exchange rate as below 10% may not provide sufficient denitrification performance in some cases. It should be noted that the case where the ion-exchange rate is 100% means that all of the cation species in zeolite has been ion-exchanged with the iron ion. In this way, ion-exchanged zeolite exerts superior purification performance.

In addition, in the case where zeolite in the present invention is β-zeolite containing the iron element and the cerium element, content of the iron element and the cerium element relative to zeolite is preferably 0.1 to 10% by weight (in oxide equivalent) as iron and 0.05 to 5% by weight (in oxide equivalent) as cerium, and more preferably 0.5 to 5% by weight as iron and 0.1 to 3% by weight as cerium. The amount of the iron element over 10% by weight not only cannot secure number of active solid acid points and decreases activity but also decreases heat resistance, while the amount below 0.1% by weight cannot provide sufficient $NO_x$ purification performance, and decreases purification performance of exhaust gas, and thus it is not preferable. On the other hand, the amount of the cerium element over 5% by weight not only cannot secure number of active solid acid points and decreases activity but also decreases heat resistance, while the amount below 0.05% by weight cannot promote suppression effect of HC poisoning, and decreases purification performance of exhaust gas, and thus it is not preferable.

It should be noted that also in the case of using a commercially available product as zeolite promoted by the iron element and the cerium element, it is preferable to select the one having the content of the iron element and the cerium element within the above range.

Zeolite added with the iron element and the cerium element is available on the market as various grades, in addition, it is produced by a procedure described in the above PATENT LITERATURE 1 (JP-A-2005-502451) or the like. That is, the iron element and the cerium element (hereafter they may also be referred to as a metal catalyst component) may be enough to be supported inside a pore or at the vicinity of a pore entrance of the β-zeolite, and a supporting method may be any of an ion-exchange method or an immersion method. In the present invention, it is desirable that at least a part of zeolite is ion-exchanged with the metal catalyst component. By being suitably ion-exchanged, a skeleton structure of zeolite is stabilized and heat resistance of zeolite itself is enhanced. It should be noted that the metal catalyst component may not be ion-exchanged completely, and a part thereof may be present as an oxide.

A method for obtaining ion-exchanged zelite is not especially limited, and by a usual method, zeolite may be ion-exchange processed using an aqueous solution of a metal catalyst component compound (for example, ferric nitrate) and fired after drying. The metal catalyst component compound is usually used as a salt form such as a nitrate, a sulfate, a carbonate and an acetate. It should be noted that firing condition may be enough in a degree sufficient to provide zeolite where the metal catalyst component is supported stably, and not especially limited. Firing temperature is preferably 300 to 1200°C, and more preferably 400 to 800°C. Heating means can be performed by a known heating means such as an electric furnace or a gas furnace.

It should be noted that zeolite may contain other transition metals, rare-earth metals or noble metals, other than the iron element and cerium element, irrespective of a type thereof. Specifically, a transition metal such as nickel, cobalt, zirconium, cupper; a rare earth metal such as lanthanum, praseodymium, neodymium; or a noble metal such as gold, silver, platinum, palladium, rhodium, or the like are included.

In both of the lower catalyst layers (A1) and (A2), content of the component (iii) zeolite is 5 to 80 g/L, and more preferably 15 to 60 g/L. The content of zeolite below 5 g/L increases $NH_3$ contacting with Pt, due to decrease in a reaction between $NH_3$ and $NO_x$, as well as decrease in adsorption capacity of $NH_3$, and promotes $NH_3$ oxidation, providing possibility of increased $NO_x$ emission, while on the contrary, the too high content over 80 g/L increases load to an engine caused by increased pressure loss, and thus not preferable.

In addition, in the selective reduction-type catalyst (SROC) to be used in the present invention, balance among NO oxidation capability, $NH_3$ adsorption amount and $NO_x$ reducing capability in the lower layer, as well as $NO_2$ concentration in $NO_x$ to be supplied from the lower layer to the upper layer, $NH_3$ adsorption amount of the upper layer, and $NO_x$ reducing capability of the upper layer, is also an important factor. Therefore, it is desirable that, in both of SROC1 and SROC2, zeolite of the component (iii) is contained in the lower layer (A), in an amount of half or less as compared with the upper layer (B) so as to have suitable suppression capability of gas diffusion property. As for gas diffusion property, the following factors are considered.

That is, zeolite has been known to suppress gas diffusion, however, too low amount of zeolite in the upper layer causes to decrease gas diffusion property in the upper layer, thus increases amount of NO in excess, which is supplied to a noble metal of the lower layer, and may provide the case where NO oxidation by the noble metal of the lower layer cannot catch up, and increase in $NO_2$ concentration required to the SCR cannot be obtained, and efficient purification of NOx cannot be performed.

In addition, low gas diffusion property due to low amount zeolite in the upper layer increases $NH_3$ amount to be supplied to the lower layer through the upper layer, and may generate a large quantity of $NO_x$ by oxidation of this $NH_3$ by a noble metal of the lower layer. A large quantity of $NO_x$ generated in this way cannot be purified completely by the catalyst of the present invention, and may be discharged as $NO_x$ as it is into air.

In the selective reduction-type catalyst (SROC) to be used in the present invention, there may be the case where some NOx purification function is exerted by NO oxidation action of the noble metal of the lower layer, even when zeolite is not contained in the lower layer. However, because zeolite is an effective SCR component, predetermined purification performance of $NO_x$ is not exerted when this zeolite is not contained. Therefore, in the selective reduction-type catalyst (SROC) of the present invention, zeolite of the component (iii) is essential.

(B) The upper catalyst layer.

The upper catalyst layer (B) of the selective reduction-type catalyst (SROC) to be used in the present invention is configured by essentially containing zeolite of the component (iii) but not containing the noble metal component.

Content of the component (iii) zeolite is 10 to 160 g/L in both of the upper catalyst layers (B1) and (B2), and more preferably, 30 to 120 g/L. The content of zeolite below 10 g/L increases $NH_3$ contacting with Pt of the lower catalyst layer, due to decrease in a reaction between $NH_3$ and $NO_x$, as well as decrease in adsorption capacity of $NH_3$, and promotes $NH_3$ oxidation, thus increasing $NO_x$ emission, while on the contrary, the too high content over 160 g/L increases load to an engine caused by increased pressure loss, and thus not preferable.

In addition, as described above, in the selective reduction-type catalyst (SROC) of the present invention, balance among NO oxidation capability, $NH_3$ adsorption amount and $NO_x$ reducing capability in the lower layer, as well as $NO_2$ concentration in $NO_x$ supplied from the lower layer to the upper layer, $NH_3$ adsorption amount of the upper layer, and $NO_x$ reducing capability of the upper layer, is also an important factor. Therefore, it is desirable that, zeolite is contained in the upper layer, in an amount of two times or more of the lower layer so as to have suitable suppression capability of gas diffusion property. As for gas diffusion property, the following factors are considered. That is, zeolite has been known to suppress gas diffusion, however, too low amount of zeolite in the upper layer causes to decrease gas diffusion property in the upper layer, thus increases amount of NO in excess, which is supplied to a noble metal of the lower layer, and may provide the case where NO oxidation by the noble metal of the lower layer cannot catch up, increase in $NO_2$ concentration required to the SCR cannot be obtained and efficient purification of NOx cannot be performed.

In addition, low gas diffusion property due to low amount of zeolite in the upper layer increases $NH_3$ amount supplied to the lower layer through the upper layer, and may generate a large quantity of $NO_x$ by oxidation of this $NH_3$ by a noble metal of the lower layer. A large quantity of $NO_x$ generated in this way cannot be purified completely by the catalyst of the present invention, and may be discharged as $NO_x$ as it is into air.

In the zeolite component (iii), one kind of a transition metal oxide such as alumina, titania, silica, zirconia, tungsten oxide; a rare earth oxide such as cerium oxide, lanthanum oxide, praseodymium oxide, samarium oxide, gadolinium oxide, neodymium oxide, or a complex oxide thereof, of the above component (ii) can be used as a promoter component or a binder. It should be noted that such a promoter component or a binder may use the exemplified oxide as it is, however, in the case where the catalyst of the present invention is obtained via a firing step, a precursor thereof may be used as a raw material of the promoter component or a raw material of the binder.

As such a promoter component, a cerium compound is preferable. The cerium compound is an oxygen storage component (OSC), and is usually converted to an oxide, as described above, and it may be a pure cerium oxide, however, it may also be a complex oxide of cerium and a transition metal such as zirconium; a complex oxide of cerium and aluminum; and a complex oxide of cerium and a rare earth metal such as lanthanum, praseodymium, samarium, gadolinium, neodymium, and a transitionmetal such as iron, nickel, cobalt.

By containing the cerium compound as the OSC, $NO_x$ is adsorbed by storage capability of oxygen, which the OSC has, and chance of contacting with other catalyst components increases and thus a reaction is promoted. By containing the OSC in the upper layer of the catalyst of the present invention, it becomes possible to retain more $NO_2$ in the upper layer having high concentration of the SCR component, which promotes a reaction with $NH_3$.

In addition, use of an inorganic oxide as the binder component is not essential in the present invention, however, by use thereof in coating the catalyst component on an integral structure-type carrier to be described later, peeling resistance performance of the catalyst component can be enhanced. It should be noted that such a binder component and the above-described base material are used in different object, and it goes without saying that, even in the case of not using the binder component, the inorganic oxide may be used as the base material.

(C) The integral structure-type carrier

The integral structure-type carrier to be used in the selective reduction-type catalyst (SROC) in the present invention is not especially limited, and a sheet-like structure where a fine fiber-like substance is knitted, or a felt-like non-combustible structure made of a relatively thick fiber-like substance may be used other than a honeycomb structure-type carrier. Among them, the honeycomb structure-type carrier is preferable, and the honeycomb structure-type carrier coated with the catalyst component on the surface thereof may be referred to hereafter as a honeycomb structure-type catalyst.

A honeycomb structure-type carrier is not especially limited, and is selectable from known honeycomb structure-type carriers. Such a carrier includes a flow-through-type carrier, or a wall-flow-type carrier to be used in the DPF and the CSF, however, the flow-through-type carrier is preferable, when used only to purify slipped $NH_3$ at the backward of the selective reduction catalyst (SCR).

In addition, total shape of such a honeycomb structure is also arbitrary, and selectable as appropriate, in response to a structure of an exhaustion system to be applied, such as a column-type, a square pole-type, a hexagonal cylinder-type, or the like. Further, hole number of the opening part may be decided suitably in consideration of kind of exhaust gas to be treated, gas flow amount, pressure loss or removal efficiency, however, in an application for exhaust gas purification of a diesel automobile, usually it is preferably about 10 to 1500 pieces, and particularly preferably 100 to 900 per square inch ($6.45$ cm$^2$). The cell density per square inch ($6.45$ cm$^2$) of 10 or more is able to secure contact area between exhaust gas and the catalyst, providing sufficient purification function of exhaust gas, while the cell density per square inch ($6.45$ cm$^2$) of 1500 or less does not generate significant pressure loss of exhaust gas, and does not impair performance of an internal combustion engine.

In addition, thickness of the cell wall of the honeycomb structure-type carrier is preferably 2 to 12 mil (milli-inch) (0.05 to 0.3 mm) and more preferably 4 to 8 mil (0.1 to 0.2 mm). In addition, as a material of the honeycomb structure-type carrier, there is a metal such as stainless steel, and ceramics such as cordierite.

It should be noted that, in the present invention, a sheet-like structure where a fine fiber-like substance is knitted, or a felt-like non-combustible structure made of a relatively thick fiber-like substance may be used, however, although the integral structure-type carrier different from these honeycomb structure carriers has fear of increasing backpressure, there may be the case of exhibiting higher processing capability as compared with other structure-type carriers, because of having high supporting amount of the catalyst component as well as large contact area with exhaust gas.

In the case of using the flow-through-type honeycomb carrier, as for coating amount of the catalyst component, coating amount of the upper layer is 50% or more of the lower layer, and the total coating amount of the upper layer and the lower layer is preferably 100 g/L or more, and more preferably 150 g/L or more, per unit volume, in a carrier having hole number of the opening part of 200 to 900 pieces, per square inch (about 6.5 cm$^2$) and thickness of the cell wall of 4 to 8 mil (0.1 to 0.2mm). Such a coated state exerts sufficient NO oxidation function in the present invention, and exerts sufficient function as the selective reduction-type catalyst.

It should be noted that the upper limit of the coating amount is not especially limited, as long as it is in a degree that production cost does not increase, honeycomb hole does not cause clogging, and backpressure of exhaust gas does not increase significantly, however, in consideration of such circumstance, it is desirable that it is about 400 g/L, and more desirably to be held in about 300 g/L, in the above flow-through-type honeycomb carrier.

In the present invention, as a material for composing the lower layer or the upper layer of the selective reduction-type catalyst (SROC), a solid acid or a binder or the like may be mixed and used, other than the above-described material. Such a solid acid includes $WO_3/Zr$, $WO_3/Ti$, $SO_3/Zr$, metallosilicate or the like, and as the binder, it is preferable that alumina, silica sol, silica-alumina or zirconia is used. In addition, as the binder, a precursor of an inorganic oxide, such as aluminum hydroxide, may be used instead of an inorganic oxide such as alumina.

In a conventional catalyst, a vanadium compound has been utilized in a component of the selective reduction catalyst, as a complex oxide with tungsten or titanium or the like. However, vanadium has high volatility and is emitted in air by exhaust gas, and vanadium emitted in air could provide serious influence on human health. Therefore, in the present invention, a harmful heavy metal component such as the vanadium compound is not contained in the SCR component of the catalyst.

Thickness of each layer may be enough to be 5 to 200 $\mu$m, however, it is desirable that thickness of the upper layer is 40 to 120 $\mu$m, and thickness of the lower layer is 20 to 120 $\mu$m. Thickness of each layer may not be equal, however, it is preferable to be within the above range. Too thin thickness of each layer becomes sufficient an in catalyst component, as well as decreases diffusion property of a gas component and makes difficult to exert function as a layer. Too thick thickness of each layer provides too much increase in gas diffusion property, and makes difficult to take balance with the layer, in view of a reaction or movement of components.

In addition, in the case of adopting the honeycomb structure as a carrier, in using the honeycomb structure with practical cell density, the layer with too thick thickness increases backpressure, and may provide the case of hindering performance of a combustion engine, although it depends on cell density.

In addition, as for the lower layer, in the case where the catalyst component is used by coating on a permeable structure carrier of ceramics or the like, the lower layer component may permeate into the structure carrier, and all of or a part of the lower layer may be integrated with the structure carrier. In addition, the structure carrier may be configured by the lower layer component, and the upper layer component may be coated thereon. It should be noted that there may be the case where a bottom layer is installed between the lower layer and the structure carrier, aiming at enhancing adhesion etc. of the catalyst layer, however, in this case, relation between the bottom layer and the lower layer is the same as relation between the structure carrier and the lower layer.

2. Reaction mechanism by the selective reduction-type catalyst (SROC)

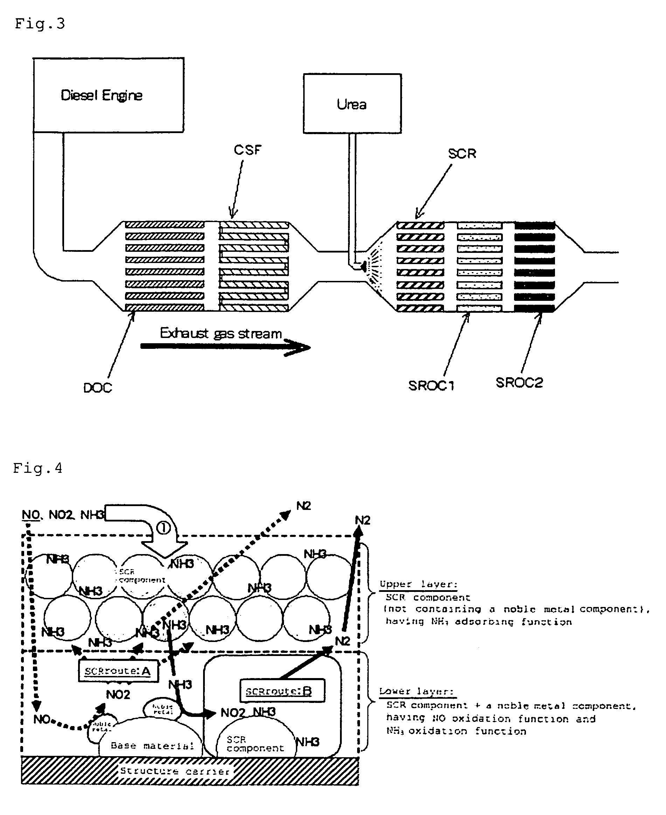

Fig. 4 shows a configuration of a selective reduction-type catalyst (SROC) tobe used in the exhaust gas purification catalyst apparatus of present invention, and is a simple schematic drawing of a fundamental reaction mechanism to be assumed.

In the present invention, the lower catalyst layer (A) having oxidation function is formed on the integral structure-type carrier such as a honeycomb carrier, and the upper catalyst layer (B) having reduction function is formed on this oxidation function layer. In Fig. 4, the catalyst layer is configure by only two layers of the upper layer and the lower layer, and a configuration not having a third layer between the upper layer and the lower layer is advantageous in view of gas diffusion property, and is effective in supplying and discharging components necessary in a reaction, such as $NH_3$ or $NO_2$ or the like, between the layers. However, the present invention should not be limited to the configuration of this schematic drawing, and a coated layer may be installed separately between the layers, between the structure carrier and the lower layer, or at the surface of the upper layer or the like, aiming at a countermeasure for peeling, sulfur poisoning, and denitrification promotion, as well as the purification of other exhaust gas components or the like. However, the layer installed separately should not inhibit effect of the present invention. It should be noted that, in Fig. 4, a promoter or a binder is not shown for simplification purpose of the drawing, however, it is without saying that it may be used as appropriate.

In the present invention, reason for the selective reduction-type catalyst (SROC) to exhibit $NH_3$ purification (oxidation) performance and $NO_x$ purification performance, is not clear, however, in Fig. 4, modeling was performed, based on such assumption that a denitrification reaction is promoted by mainly the following three reaction routes. As shown in an arrow mark (1) in the drawing, NO and $NO_2$ in exhaust gas flow into the selective reduction-type catalyst (SROC) and $NH_3$ is supplied.

Outline of the reaction route is as follows: firstly, [ a reaction route where $NH_3$, which is a reducing agent, is supplied together with the $NO_x$ component such as NO or $NO_2$, to the SCR component (zeolite) of the upper layer, and $NO_x$ is discharged as $N_2$ and $H_2O$ (not shown] ; secondly, [ a reaction route where NO arrived at the lower layer passing through the upper layer is oxidized to $NO_2$ by the noble metal component (Pt or Pd), and this $NO_2$ moves to the upper layer to contact with the SCR component and reacts with $NH_3$ adsorbed and maintained on the SCR component of the upper layer, and is discharged as $N_2$ and $H_2O$ (an "SCR route: A" shown by a dotted line in Fig. 4)]; and thirdly, [a reaction route where NO arrived at the lower layer is oxidized to $NO_2$ by the noble metal component, and this $NO_2$ is supplied to the SCR component of the lower layer and reacts with $NH_3$ adsorbed and maintained on the SCR component of the lower layer, and discharged as $N_2$ and $H_2O$ (not shown) ( an "SCR route: B" shown by a solid line in Fig. 4)].

In the reaction route via the noble metal component of Fig. 4, reactivity between $NO_2$ and $NH_3$ is predominant as compared with reactivity between NO and $NH_3$, and after oxidizing NO to $NO_2$ via the noble metal component, and by supplying it to each SCR component (zeolite) of the upper layer and the lower layer, adenitrification reaction is promoted.

In the present invention, positional relation between the noble metal component and the SCR component is also an important point in view of configuration. In the catalyst of the present invention, the noble metal component is not contained in the upper layer, and is contained only in the lower layer. It is because the noble metal component such as platinum or palladium is superior in function for promoting an oxidation reaction of the reducing component, therefore presence of the noble metal component at the upper layer of the selective reduction oxidation catalyst progresses a reaction between $NH_3$ and oxygen in exhaust gas, in preference to a reaction between $NH_3$ and $NO_x$ in the SCR component, and generates new $NO_x$ derived from $NH_3$, which is discharged as it is without being reduced. By including the noble metal component in the present invention only in the lower layer, even if new $NO_x$ derived from $NH_3$ is generated in the lower layer, and there may be the case where this new $NO_x$ cannot be reduced completely in the lower layer, this new $NO_x$ is purified by passing through the upper layer and is thus never discharged as it is without being reduced.

It should be noted that a catalyst containing the noble metal component has been used conventionally as the selective reduction catalyst (SCR). However, the conventional use method generated $NO_x$ derived from $NH_3$ oxidation, as well as $NH_3$ which originally should be used in the SCR component has been consumed on the noble metal. Therefore, to acquire sufficient denitrification performance, it was necessary to supply an excess amount of the $NH_3$ component by estimating $NH_3$ to be consumed by the noble metal. However, supply of the excess amount of the $NH_3$ component

accompanies generation risk of slipped $NH_3$, which is discharged without being used in the denitrification reaction. In the present invention, positions of the noble metal component and the SCR component are different as compared with a conventional catalyst, and the noble metal component is absent in the upper layer, therefore such a problem is not generated.

Another point is presence of the zeolite component (iii) to selectively reduce $NO_x$ along with the noble metal component (i), in the lower layer. In the present invention, although the noble metal component is present only in the lower layer, because the noble metal component adsorbs and oxidizes $NH_3$, $NO_x$ derived from $NH_3$ is generated. Because the noble metal component such as platinum and the SCR component coexist only in the lower layer, $NO_x$ derived from $NH_3$ generated on the noble metal component is reduced more quickly, using $NH_3$ adsorbed and maintained at the SCR component, as a reducing agent.

In addition, most of $NH_3$ is oxidized here by strong oxidation promoting action of the noble metal component, and supplied as $NO_2$ to the SCR component (zeolite). Because $NO_2$ is superior in reactivity with $NH_3$, it is reduced quickly by contacting with the SCR component (zeolite) and thus suppresses that $NO_x$ generated with derived from $NH_3$ is discharged, as it is. It should be noted that, in the selective reduction-type catalyst (SROC1) at the forward stage to be used in the present invention, a platinum component is contained in an amount of 90% by weight or more in metal equivalent, as total noble metal component in the lower catalyst layer (A1). In addition, in the selective reduction-type catalyst (SROC2) at the backward stage to be used in the present invention, a palladium component is contained in an amount of 40% by weight or more inmetal equivalent, as total noble metal component in the lower catalyst layer (A2). In this way, kind of the noble metal component is different between the selective reduction-type catalyst (SROC1) at the forward stage and selective reduction-type catalyst (SROC2) at the backward stage, however, reaction mechanism becomes similar.

3. Production method for the selective reduction-type catalyst

In the present invention, to produce the selective reduction-type catalyst (SROC1, SROC2), firstly the lower layer catalyst material, the upper layer catalyst material and the integral structure-type carrier are prepared. The catalyst material is produced by mixing additives such as a binder or a precursor of the binder, or a surfactant, as needed, with a water-based medium to make a slurry-like mixture, and after coating onto the integral structure-type carrier, by drying and firing. That is, by mixing the catalyst material and the water-based medium in predetermined ratio, a slurry-like mixture is obtained. In the present invention, the water-based medium may be used in an amount so that each catalyst component can be dispersed uniformly in slurry.

The lower layer catalyst material contains a metal catalyst component containing a noble metal of the first component (i), an inorganic base material selected from alumina, titania, silica, zirconia, tungsten oxide, a transition metal oxide, a rare earth oxide, or a complex oxide thereof of the second component (ii), and zeolite of the third component (iii). As the noble metal of component (i), in the case of the selective reduction-type catalyst (SROC1) at the forward stage, a platinum component is contained in an amount of 90% by weight or more inmetal equivalent, and in the case of the selective reduction-type catalyst (SROC2) at the backward stage, a palladium component is contained in an amount of 40% by weight or more in metal equivalent.

Slurry is prepared by mixing the noble metal catalyst component of the first component (i), the component (ii) as the inorganic base material, and zeolite of the third component (iii) in the water-based medium, however, the noble metal of the component (i) can also be supported on the d component (ii) as the inorganic base material, in advance. In addition, separate from this, the upper layer catalyst raw material has essentially zeolite of the component (iii), and the component (ii) is blended as needed.

In the case where the noble metal of the component (i) is supported on the inorganic base material of the component (ii), in advance, in preparing the lower layer catalyst raw material, a known method may be adopted as appropriate, however, one example thereof is shown as follows.

Firstly, as a raw material of the noble metal component, a salt compound such as a nitrate, a sulfate, a carbonate, an acetate, and specifically, in the case of a palladium component, a solution of chloroplatinic (IV) acid, diammine platinum nitrite or platinic acid amine hydroxide, as well as in the case of a palladium component, dinitrodiammine palladium, palladium nitrate or palladium chloride are prepared. From these, a raw material of the noble metal component is selected and dissolved in water or an organic solvent to prepare a solution of the raw material of the noble metal component. It should be noted that water or a solvent obtained by adding a water-soluble organic solvent to water is referred to hereafter as a "water-based medium".

Next, after mixing this solution of raw material of each noble metal component with each inorganic base material together with a water-based medium, solvent is removed by drying at 50 to 200°C, and then the residue is fired at 300 to 1200°C. In this way, the noble metal of the component (i) can be supported on the inorganic base material of the component (ii), in advance.

In the catalyst composition of the present invention, a known catalyst material may be blended, as an oxygen storage component, a base material and a binder or the like, other than the above essential components. As such a known catalyst material, there is included a cerium-zirconium-type complex oxide, cerium oxide, titania, zirconia, zeolite, alumina, silica, silica-alumina, an alkali metal material, an alkaline earth metal material, atransitionmetalmaterial, a rare earth metal material, rhodium, a rhodium salt, silver, a silver salt, or the like, and as needed, a dispersing agent, a binder, a pH modifier may be used in combination. It should be noted that the binder may be precursors of these oxides, such as aluminum hydroxide, for example, a solution of water-soluble salt, or the like.

The catalyst composition converted to a slurry-likemixture, is coated on the integral structure-type carrier using various kinds of coating methods. A coating method is not especially limited, however, a wash-coat method is preferable. By performing drying and firing after coating, the integral structure-type catalyst, on which the catalyst composition is supported, is obtained. It should be noted that drying temperature is preferably 100 to 300°C, and more preferably 100 to 200°C. In addition, firing temperature is preferably 300 to 500°C, and particularly preferably 400 to 500°C. Heating means can be performed by a known heating means such as an electric furnace or a gas furnace.

In the present invention, to form a plurality of layers of the catalyst composition on the integral structure-type carrier, operation of drying and firing may be repeated by each layer twice or more, after coating each material. In addition, a method for drying and firing at one time, after coating the lower layer catalyst material and the upper layer catalyst material two times in succession, using a wash-coat method; or a method for drying after coating the lower layer catalyst material using a wash-coat method, and drying and firing after coating a material of the second and the subsequent layer thereon; may be adopted. In addition, the integral structure-type catalyst of the present invention may be completed by coating each catalyst material as slurry containing a precursor, and drying and firing the integral structure-type carrier.

In the case where the catalyst composition is coated on the honeycomb-type integral structure-type carrier, and the honeycomb shape is polygonal, thickness of the layer is preferably in a range of 5 to 200 $\mu$m, and particularly preferably in a range of 10 to 150 $\mu$m, in both of the upper layer (B) and the lower layer (A), at substantially most of the sites of the SROC1 and the SROC2, although it is different by honeycomb site.

In both of the SROC1 and the SROC2, the too thin upper layer (B), such as below 5 $\mu$m, decreases gas diffusion property. In addition, too thick total layer thickness, such as over 200$\mu$m, provides fear of load on an engine caused by increase in pressure loss, in the case where the catalyst composition of the present invention is coated on the honeycomb-type integral structure-type carrier to be usually used. The particularly preferable thickness is 40 to 120 $\mu$m for the upper layer (B) and 20 to 120 $\mu$m for the lower layer (A).

4. The selective reduction catalyst (SCR)

In the present invention, the selective reduction-type catalyst (SROC) uses ammonia or urea as a reducing agent to oxidize nitrogen monoxide (NO) in exhaust gas discharged from a lean burn engine, as well as reduce a nitrogen oxide with the reducing agent to be sprayed in exhaust gas, and oxidize excess ammonia, therefore, it can be utilized also as the selective reduction catalyst (SCR) to purify a nitrogen oxide in exhaust gas by similarly using an aqueous solution of ammonia or an aqueous solution of urea as the reducing agent.

$NO_x$ is discharged from a lean burn engine such as a diesel engine, by being lean-burnt at high temperature. The SCR catalyst is used to purify this $NO_x$, by supplying a reducing agent together with exhaust gas to the selective reduction catalyst. In such an SCR, HC, aldehyde or the $NH_3$ component is used as the reducing agent, and in the case of the SCR using the $NH_3$ component as the reducing agent, superior effect is exerted. Hereafter, the SCR indicates the SCR using this $NH_3$ component as the reducing agent.

As such an SCR catalyst, a known one can be used, however, as a component configuring the SCR catalyst to be preferably used in the present invention, one or more kinds of components selected from the similar component (ii) as (SROC1) and (SROC2), as an arbitrary component, alumina, titania, silica, zirconia, tungsten oxide, a transition metal oxide, a rare earth oxide, or a complex oxide thereof can be used with zeolite of the component (iii) as the essential component; similarly as (SROC1) and (SROC2). Such an SCR catalyst is specialized to have reductive purification function of $NO_x$ using the reducing component, and differs in not having oxidation function as (SROC1) and (SROC2). Therefore, it is more preferable that the noble metal component such as platinum or palladium, such as a catalyst component contained in the lower layers (A1) and (A2) is contained in less amount as compared with (SROC1) and (SROC2), or not contained at all.

5. Exhaust gas purification catalyst apparatus, and purification method using the same

In the present invention, the exhaust gas purification catalyst apparatus is configured by using two selective reduction-type catalysts (SROC1, SROC2), having the above oxidation function layer, and arranging the SROC1 forward and the SROC2 backward in a flow passage of exhaust gas, and arranging the spraying means for supplying an aqueous solution of urea or an aqueous solution of ammonia at the upstream side of the SROC1.

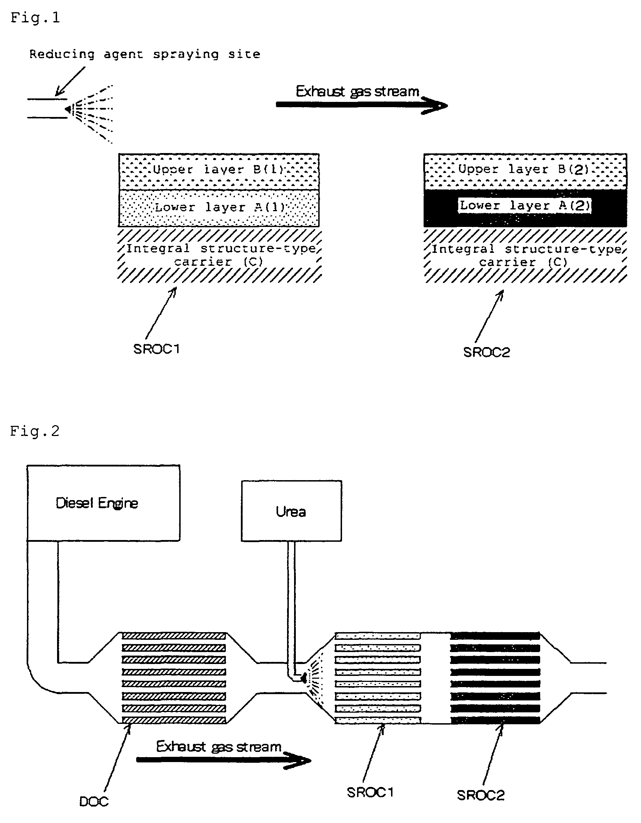

In the exhaust gas purification catalyst apparatus of the present invention, as shown in Fig. 1, the SROC1 essentially having Pt as a noble metal species is arranged in the lower layer (A1) of selective reduction-type catalyst of the forward stage, and the SROC2 essentially having Pd as a noble metal species are arranged in the lower layer (A2) of the backward stage.

Inaddition, in the lower catalyst layer (A1), it is desirable that the noble metal component is all the platinum component, however, a part of the platinum component may be substituted with the palladium component, as long as it is a certain degree of amount. By substituting a part of the platinum component with the palladium component, amount of the expensive platinum component can be reduced, and thus rawmaterial cost can be reduced. In addition, in the lower catalyst layer (A2), all of the noble metal component may be the palladium component, however, a part of the palladium component may be substituted with the platinum component. However, too high amount of the platinum component in (A2) may decrease purification performance of $NH_3$ or $NO_x$.

Reason for exerting superior effect by separating use position of platinum and palladium to the forward stage and the backward state, relative to the integral structure-type carrier of the selective reduction-type catalyst is not certain, however, it is considered that platinum has higher oxidation activity of $NH_3$ as compared with palladium, and is superior in suppressing capability of leakage of $NH_3$ to be used as a reducing agent, but on the other hand has high generation risk of $NO_x$ newly, while palladium has lower oxidation activity of $NH_3$ as compared with platinum, but on the other hand promotes reductive purification of $NO_x$ using $NH_3$ in combination with zeolite, and in the present invention, it is considered that by interaction of such a combination of platinum and palladium, superior purification performance of slipped $NH_3$, and purification performance of $NO_x$ will be attained.

In the present invention, the integral structure-type carrier (C) may be configured as a separate honeycomb catalyst for use in each of the forward stage and the backward stage, or each catalyst component may be configured by being coated separately at the forward and backward of one honeycomb structure.

In the case of using the selective reduction-type catalyst relevant to the present invention for an automobile application, it can be used in combination of a catalyst exerting other action. Such an arrangement will be exemplified below including the one already described.

It should be noted that, in the exemplification below, the oxidation catalyst is represented as the DOC; the selective reduction oxidation catalyst of the present invention is represented as the SROC1 and the SROC2; the selective reduction catalyst other than the SROC1 and the SROC2 is represented as SCR; and a filter for filtering off soot or the soluble organic fraction (SOF) in exhaust gas is represented as DPF (including CSF coated with the oxidation catalyst). In addition, the ($NH_3$) represents a spraying supply site of an aqueous solution of urea or an aqueous solution of ammonia, as the reducing agent. In addition, the $NH_3$ component to be used in the present invention may be the one self-generated by using components in exhaust gas or a fuel component, by the catalyst arranged at the forward stage of the SCR, the SROC 1 and the SROC2; or aldehydes, which may be generated in used bio-fuel, may also be used, other than by spraying supply of an aqueous solution of urea or an aqueous solution of ammonia or the like. Also in the case where the reducing agent is self-generated in this way, a reducing agent may be spraying supplied separately from exterior, as needed.

An arrangement example (1): DOC+($NH_3$)+SROC1+SROC2
An arrangement example (2): DOC+($NH_3$)+SCR+SROC1+SROC2
An arrangement example (3): DOC+DPF+($NH_3$)+SROC1+SROC2
An arrangement example (4): DOC+DPF+($NH_3$)+SCR+SROC1+SROC2
An arrangement example (5): DOC+($NH_3$)+SROC1+SROC2+DPF
An arrangement example (6): DOC+($NH_3$)+SCR+SROC1+SROC2+DPF
An arrangement example (7): DOC+($NH_3$)+SROC1+SROC2+DOC+DPF
An arrangement example (8): DOC+($NH_3$)+SCR+SROC1+SROC2+DOC+DPF

It should be noted that, in the description of the above arrangement examples, a reducing component supply site ($NH_3$) may be omitted in some cases.

(The arrangement example (1): DOC+ a reducing component supply site +SROC1+SROC2)

In the present invention, because the SROC1 and the SROC2 are those which effectively use $NO_2$ having superior reactivity with $NH_3$, in purification of $NO_x$, it is preferable that the oxidation catalyst (DOC) is arranged at the forward stage of the SROC1 relative to a flow passage of exhaust gas, as shown in Fig. 2. The DOC not only oxidizes NO but also purifies, by oxidation and combustion, a part of carbon monoxide (CO) or hydrocarbon (HC), or the fine particular component in exhaust gas.

That is, in this exhaust gas purification catalyst apparatus, it is preferable that, in a flow passage of exhaust gas, the oxidation catalyst (DOC) having oxidation function of nitrogen monoxide and a hydrocarbon, and the two selective reduction-type catalysts (SROC1 and SROC1) having an oxidation function layer are arranged at the backward stage thereof, and a spraying means for supplying the aqueous solution of urea or the aqueous solution of ammonia is arranged at the downstream of the oxidation catalyst and the upstream side of the SROC1.

The exhaust gas purificationmethod of the present invention is characterized by making pass through exhaust gas discharged from a lean burn engine to the oxidation catalyst (DOC), converting nitrogen monoxide in exhaust gas to nitrogen dioxide, then spraying supplying an aqueous solution of urea or an ammonia component, and making pass through the two selective reduction-type catalyst (SROC1, SROC2) to reduce and purify a nitrogen oxide in exhaust gas, without slipping $NH_3$, using this exhaust gas purification catalyst apparatus.

In purification of $NO_x$ in exhaust gas, main actions are as follows. That is, amount of the $NO_2$ component in $NO_x$ is increased by arranging the present catalyst in a flow passage of exhaust gas discharged from a lean burn engine such as a diesel engine or the like, and converting NO in exhaust gas to $NO_2$ by action of the present catalyst. It has conventionally been said preferable that NO is oxidized in advance, because among the $NO_x$ component, $NO_2$ has higher reactivity with $HN_3$ than NO, (Catalysis Today, 114 (2006), 3-12 (page 4, left column)).

The present invention is possible to utilize this effectively, and promotes purification performance of $NO_x$, by arranging the reducing agent supplying site and the selective reduction-type catalyst (SROC1, SROC2) at the backward stage of the DOC, supplying exhaust gas to the DOC to convert the NO component to $NO_2$ having superior reactivity with $NH_3$, so as to increase concentration of $NO_2$ in $NO_x$, and supplying it to the SROC1 and the SROC2.

Thus, exhaust gas having increased amount of the $NO_2$ component contacts with the two selective reduction-type catalyst (SROC1, SROC2), supplied with the ammonia component, so that $NO_x$ in exhaust gas is purified. Here, as for supply of the ammonia component, the aqueous solution of $NH_3$ may be sprayed directly to a flow passage of exhaust gas, however, in view of safety or easiness in handling, it is desirable to be supplied as an aqueous solution of urea. The aqueous solution of urea may be supplied directly in the flow passage of an exhaust gas, however, it may be supplied by being modified as appropriate to $NH_3$ having higher reactivity, during spraying to a flow passage of exhaust gas, or before spraying to a flow passage of exhaust gas. By arrangement of the catalyst in this way, $NO_x$ is purified efficiently by a reaction route predicted as shown in Fig. 4.

(The arrangement example (2): DOC+ a reducing component supply site + SCR catalyst+SROC1+SROC2)

This arrangement is the one added with the SCR catalyst, as sown in Fig. 3, to the arrangement [DOC+SROC1+SROC2] of Fig. 2.

That is, this exhaust gas purification catalyst apparatus is arranged with the oxidation catalyst (DOC) having oxidation function of nitrogen monoxide and a hydrocarbon in a flow passage of exhaust gas, and the selective reduction-type catalysts (SROC1 and SROC1) having the oxidation function layer at the backward stage thereof, and a spraying means for supplying the aqueous solution of urea or the aqueous solution of ammonia at the downstream of the oxidation catalyst and the upstream side of the selective reduction-type catalyst, as well as further the selective reduction catalyst (SCR) not substantially having an oxidation function layer at the upstream of the selective reduction-type catalyst (SROC1, SROC2) and at the downstream of the spraying means.

And, the present invention is a method for exhaust gas purification for oxidation purifying excess ammonia in exhaust gas by making pass through exhaust gas discharged from a lean burn engine to the oxidation catalyst (DOC), converting nitrogen monoxide in exhaust gas to nitrogen dioxide, then spraying supplying an aqueous solution of urea or an ammonia component, and making pass through the selective reduction catalyst (SCR) to reduce a nitrogen oxide in exhaust gas, and by further passing through the selective reduction-type catalyst (SROC1, SROC2), using this exhaust gas purification catalyst apparatus.

Because arrangement of "SROC1+SROC2" of the present invention has superior $NH_3$ purification function, by arranging it at the backward stage of a known SCR catalyst relative to a flow of exhaust gas, $NH_3$ slipped from the SCR can be efficiently oxidized.

In this way, by arranging the SROC1 and the SROC2 of the present invention at the backward stage of the SCR catalyst to purify slipped $NH_3$, amount of $NO_x$ to be discharged as exhaust gas further decreases. Arrangement of the known SCR catalyst at the forward stage of the SROC1 and the SROC2 leads to increase capacity of the SCR in total and also to enhance purification performance of $NO_x$. In addition, because the SROC1 and the SROC2 of the present invention exert superior SCR action also in purification of slipped $NH_3$, as described above, NOx not completely purified at the forward stage SCR can be purified, by effectively utilizing slipped $NH_3$.

By verification result of $NO_x$ purification performance at a temperature of 300°C, 400°C, and 500°C, by supplying exhaust gas from an automotive diesel engine to the exhaust gas purification catalyst apparatus of the present invention, it has been confirmed that higher denitrification performance is exerted, in particular, at a high temperature region, as compared with JP-A-2008-279334 (it corresponds to Comparative Example 7 of the present invention) which was proposed by the present inventor before. It should be noted that such denitrification performance can be evaluated based on the amount of $N_2$ in exhaust gas, and such an evaluation is effective also in evaluation of denitrification performance of the SCR or other catalysts, not limited to the case of the SROC1 and the SROC2 of the present invention.

(The arrangement example (3) : DOC+DPF+ reducing component supply site +SROC1+SROC2)

This arrangement is the one added with the filter (DPF), to the arrangement [DOC+SROC1+SROC2] of Fig. 2. Exhaust gas discharged from a diesel engine includes a combustible particular component other than $NO_x$. This combustible particular component has the soluble organic fraction (SOF) or soot as a main component. As a method for removing these combustible particular components, there is a method for filtering off from exhaust gas using a filter (JP-A-09-53442 or the like). Conventionally, because $NO_2$ is effectively used in combustion of the combustible particular components, the filter is arranged as "DOC+DPF". However, this "DOC+DPF" is a combination of an oxidation-type reaction and a combustion-type reaction, and a large quantity of the $NO_x$ component is contained in exhaust gas discharged from the backward stage thereof.

Therefore, by arranging the SROC of the present invention as [DOC+DPF+SROC1+SROC2], it become possible to remove the combustible particular components and $NO_x$ in exhaust gas effectively at the same time. It should be noted that, as for the DPF, the one having only filtering function may be used, however, a catalyzed one blended with Pt, Pd or the like may also be used to promote combustion of the combustible particular components.

Purification method of $NO_x$ in exhaust gas using the SROC1 and the SROC2 in this arrangement example is performed by supplying an aqueous solution of urea or an aqueous solution of ammonia at the forward stage of the SROC1 and the SROC2, similarly as described above. In removing a harmful fine particular component deposited on a filter, fuel is supplied from the forward of the oxidation catalyst (DOC). A method for supplying fuel may include, other than a method for directly spraying fuel in a flow passage of exhaust gas, a method for supplying fuel into an exhaustion tube by heating vaporization; a method for supplying excess fuel into a combustion room of an engine; and a method for injecting fuel into a combustion room at or subsequent to an explosion step in a combustion cycle. As a fuel component to be supplied, a light oil component is supplied in purification of exhaust gas discharged from a diesel engine. The fuel component supplied into a flowpassage of exhaust gas contacts with the DOC, similarly as NO. In this case, NO in exhaust gas is converted to $NO_2$ by oxidation action of the DOC, thus increasing amount of $NO_2$ in $NO_x$.

Exhaust gas modified by the DOC contacts with a harmful fine particular component collected by a filter arranged at the backward stage of the DOC, and combusts and removes the harmful fine particular component by heat, $NO_2$ and oxygen remaining in exhaust gas to reproduce the filter (DPF).

Exhaust gas passed through the DPF is supplied to the SROC1 and the SROC2 together with the reducing component to purify $NO_x$ in exhaust gas. In this time, when the DPF is catalyzed by the noble metal component such as Pt, amount of $NO_2$ decreased by being used in combustion of the fine particular component of the DPF can be increased anew, and thus denitrification performance in the backward SROC1 and SROC2 can be enhanced.

Exhaust gas atmosphere of an automobile varies every moment in view of HC amount or components composition thereof, by control condition and operation condition thereof. Even in such a state, by this arrangement of an apparatus of the present invention, superior HC oxidation perf ormance and heat generation performance can be maintained, and by combined use of the DOC and the DPF, the harmful fine particular component can be combusted in high efficiency, reproduction of the filter can be performed and the $NO_x$ component in exhaust gas can be purified and slip of $NH_3$ can be suppressed as well.

(The arrangement example (4): DOC+CSF+($NH_3$)+SCR+SROC1+SROC2)

This catalyst arrangement is a catalyst apparatus where the filter (DPF)is changed to a filter (CSF) catalyzed by the noble metal component containing the Pt component, and further added with the SCR catalyst, relative to the arrangement example (3), and is the one catalyst apparatus which is capable of purifying exhaust gas discharged from a diesel engine most effectively.

Firstly, bypurifyingHC, CO or the like by oxidation function of the DOC, as well as oxidizing NO in exhaust gas, $NO_2$ concentration can be increased, and further, by oxidizing the HC component contained in exhaust gas, temperature of exhaust gas can also be raised. Subsequently, in the CSF, the fine particular component can be combusted effectively by $NO_2$ and oxygen in exhaust gas, as well as heat and $NO_2$ generated by the DOC. And, when the DPF is the CSF catalyzed by the Pt component, concentration of $NO_2$ decreased by being used in combustion of the fine particular component can be increased anew.

Subsequently, exhaust gas passed through the DPF is mixed with the reducing component supplied into the exhaustion tube, and introduced to the SCR catalyst to purify $NO_x$ in exhaust gas. Here, because concentration of $NO_2$ in exhaust gas has been increased by the catalyzed DPF, denitrification in the SCR catalyst is promoted. At this time, it is preferable that the SCR catalyst does not contain the noble metal component such as Pt as a component thereof. By not containing the noble metal component, the reducing component such as $NH_3$ can be utilized effectively for denitrification, in the SCR catalyst. By containing an oxidizable activated species such as the Pt component, the reducing component is oxidized directly and there may be the case where sufficient denitrification performance cannot be obtained.

However, when the SCR catalyst does not contain the oxidative activated species such as the Pt component, the reducing component, not utilized in denitrification, slips and is discharged backward the SCR catalyst. For exhaust gas passed through the SCR catalyst in this way, the SROC1 and the SROC2 relevant to the present invention is capable of not only purifying the slipped $NH_3$ component but also suppressing amount of $NO_x$ generating in purification of $NH_3$. Furthermore, the SROC1 and the SROC2 are also capable of purifying $NO_x$ remaining in exhaust gas by utilizing $NH_3$ slipped from the SCR catalyst.

EXAMPLES

Explanation will be given below more clearly on characteristics of the present invention by showing Examples and Comparative Examples. It should be noted that the present invention should not be limited to embodiments of these Examples. It should be noted that the lower layer catalyst component and upper layer catalyst component of the SROC to be used in the present Examples along with Comparative Examples were prepared by the method shown next.

[Production of the Pt-based SROC: SROC (a)]

=The lower layer (a catalyst layer having $NH_3$ oxidation function) =

By making immersion supported an aqueous solution of a platinum chloride as a raw material of a noble metal component, on titania powder (a BET value of 190 m²/g) as a base material (in metal equivalent Pt: 2.5% by weight), and further by adding water, β-type zeolite ion-exchanged with an iron element (in terms of an iron element: concentration 2% by weight, ion-exchanged amount 70%, SAR=40), and silica as a binder, concentration was adjusted, and they were milled using a ball mill to obtain the slurry of an $NH_3$ oxidation catalyst part for a lower layer part to be used in the SROC (a). This slurry was coated, by a wash-coat method, on a honeycomb flow-through-type honeycomb cordierite carrier (cell density: 300 cell/inch², wall thickness: 5 mil, length: 3 inch and diameter: 1 inch), and after drying it at 150°C for 1 hour, it was fired at 500°C for 2 hours under air atmosphere. Thickness of the lower layer was 20 to 120 μm.

=The upper layer (the SCR layer)=

After that, β-type zeolite ion-exchanged with an iron element (in terms of an iron element: concentration 2% by weight, ion-exchanged amount 70%) (SAR=40), and β-type zeolite ion-exchanged with an iron element and cerium element (in terms of an iron element: concentration 2% by weight, ion-exchanged amount 70%) (in terms of an cerium element: concentration 0.1% by weight, ion-exchanged amount 5%) (SAR=40), water and silica as a binder were milled using a ball mill to obtain slurry for an upper layer part of the SROC (a). This slurry was coated, by a wash-coat method, on a honeycomb flow-through-type honeycomb cordierite carrier, which was coated at the lower layer part, and after drying it at 150°C for 1 hour, it was fired at 500°C for 2 hours under air atmosphere.
A catalyst composition of the SROC (a) obtained in this way is shown in Table 1. It should be noted that numerical values in Table 1 are supporting amounts (g/L) per unit volume of the honeycomb flow-through-type honeycomb cordierite carrier, and Pt is weight of the Pt component in metal equivalent. Thickness of the upper layer was 40 to 120 μm.
Table 1

| SROC (a) Pt-based SROC | Fe-β zeolite | Fe/Ce-β zeolite | Titania | Silica | Pt | Pd |
|---|---|---|---|---|---|---|
| Upper layer | 60 | 40 | | 5 | | |
| Lower layer | 30 | | 40 | 40 | 1 | |

[Production of the Pd-based SROC: SROC (b)]

The SROC (b) was obtained by forming the upper catalyst layer similarly as in the SROC (a), except by changing an aqueous solution of platinum chloride of a raw material of the noble metal component to an aqueous solution of palladium nitrate, in the lower catalyst layer of the SROC (a). Thickness of the lower layer was 20 to 120 μm, and thickness of the upper layer was 40 to 120 μm.
A catalyst composition of the SROC (b) obtained in this way is shown in Table 2. It should be noted that numerical values in Table 2 are supporting amounts (g/L) per unit volume of the honeycomb flow-through-type honeycomb cordierite carrier, and Pd is weight of the Pd component in metal equivalent.
Table 2

| SROC (b) Pd-based SROC | Fe-$\beta$ zeolite | Fe/Ce-$\beta$ zeolite | Titania | Silica | Pt | Pd |
|---|---|---|---|---|---|---|
| Upper layer | 60 | 40 | | 5 | | |
| Lower layer | 30 | | 40 | 40 | | 1 |

[Production of the Pt-Pd-based SROC: SROC (c)]

The SROC (c), having Pt: Pd ratio of 1:1 in metal equivalent, was obtained by forming the upper catalyst layer similarly as in the SROC (a), except by using an aqueous solution of palladium nitrate in addition to an aqueous solution of platinum chloride as a raw material of the noble metal component, in the lower catalyst layer of the SROC (a). Thickness of the lower layer was 20 to 120 $\mu$m, and thickness of the upper layer was 40 to 120 $\mu$m.

A catalyst composition of the SROC (c) obtained in this way is shown in Table 3. It should be noted that numerical values in Table 3 are supporting amounts (g/L) per unit volume of the honeycomb flow-through-type honeycomb cordierite carrier, and Pt is weight of the Pt component in metal equivalent, and Pd is weight of the Pd component in metal equivalent.
Table 3

| SROC (c) Pt-Pd mixed SROC Pt:Pd=1:1 | Fe-$\beta$ zeolite | Fe/Ce-$\beta$ zeolite | Titania | Silica | Pt | Pd |
|---|---|---|---|---|---|---|
| Upper layer | 60 | 40 | | 5 | | |
| Lower layer | 30 | | 40 | 40 | 0.5 | 0.5 |

In addition, the SROC (d) having Pt: Pd ratio of 1:3 in metal equivalent, was obtained, by changing Pt: Pd ratio in the lower catalyst layer, in the SROC (c). A catalyst composition of the SROC (d) is shown in Table 4.
Table 4

| SROC(d), Pt-Pd mixed SROC Pt:Pd=1:3 | Fe-$\beta$ zeolite | Fe/Ce-$\beta$ zeolite | Titania | Silica | Pt | Pd |
|---|---|---|---|---|---|---|
| Upper layer | 60 | 40 | | 5 | | |
| Lower layer | 30 | | 40 | 40 | 0.25 | 0.75 |

In addition, the SROC (e) having Pt: Pd ratio of 3:1 in metal equivalent, was obtained, by changing Pt: Pd ratio in the lower catalyst layer, in the SROC (c). A catalyst composition of the SROC (e) is shown in Table 5.
Table 5

| SROC(e), Pt-Pd mixed SROC Pt:Pd=3:1 | Fe-$\beta$ zeolite | Fe/Ce-$\beta$ zeolite | Titania | Silica | Pt | Pd |
|---|---|---|---|---|---|---|
| Upper layer | 60 | 40 | | 5 | | |
| Lower layer | 30 | | 40 | 40 | 0.75 | 0.25 |

(Examples 1 to 3, and Comparative Examples 1 to 12)

The above SROC (a), SROC (b), SROC (c), SROC (d) and SROC (e) were cut out in a size of $\varphi$ 8×L 4 mm, to obtain an exhaust gas purification catalyst apparatus of Examples and Comparative Examples as shown below, in assuming that they are arranged two pieces in series backward the SCR of the following catalyst layout. Each catalyst apparatus is shown in Table 6. In { } in the Table, kind of a noble metal contained in each SROC is described. In addition, numbers in ( ) of{[ ( )]} represent content of Pt and Pd in { }.
Table 6

| | | SROC1 | | SROC2 | |
|---|---|---|---|---|---|
| Example 1 | SROC (a) | {Pt (1)} | SROC(b) | {Pd(1)} |
| Example 2 | SROC (a) | {Pt (1)} | SROC(d) | {[Pt (0.25)· Pd(0.75)]} |
| Example 3 | SROC (a) | {Pt (1)} | SROC(c) | {[Pt(0.5)· Pd(0.5)]} |
| Comparative Example 1 | SROC(b) | (Pd(1)} | SROC(b) | {Pd(1)} |
| Comparative Example 2 | SROC (a) | {Pt (1)} | SROC(e) | {[Pt(0.75)· Pd(0.25)]} |
| Comparative Example 3 | SROC(d) | {[Pt(0.25)·Pd(0.75)]} | SROC (d) | {[Pt(0.25)· Pd(0.75)]} |
| Comparative Example 4 | SROC(c) | {[Pt(0.5)·Pd(0.5)]} | SROC (c) | {[Pt(0.5)· Pd(0.5)]} |
| Comparative Example 5 | SROC(c) | {[Pt(0.5)·Pd(0.5)]} | SROC (b) | {Pd(1)} |
| Comparative Example 6 | SROC(e) | {[Pt(0.75)·Pd(0.25)]} | SROC (b) | {Pd(1)} |
| Comparative Example 7 | SROC (a) | {Pt(1)} | SROC (a) | {Pt(1)} |
| Comparative Example 8 | SROC (d) | {[Pt(0.25)·Pd(0.75)]} | SROC (b) | {Pd(1)} |
| Comparative Example 9 | SROC(e) | {[Pt(0.75)·Pd(0.25)]} | SROC(d) | {[Pt(0.25)· Pd(0.75)]} |
| Comparative Example 10 | SROC(d) | {[Pt(0.25)·Pd(0.75)]} | SROC (e) | {[Pt(0.75)· Pd(0.25)]} |
| Comparative Example 11 | SROC (e) | {[Pt(0.75)·Pd(0.25)]} | SROC(e) | {[Pt(0.75)· Pd(0.25)]} |
| Comparative Example 12 | SROC(d) | {Pd(1)} | SROC (a) | {Pt(1)} |

<Evaluation of catalyst performance> (Evaluation of $NH_3$ slip)

As for the catalyst of each Example and Comparative Example, after performing a durability (aging) at 700°C for 20 hours under air atmosphere, generation amount of $N_2$ was measured under the following model gas condition. It should be noted that the composition of the model gas used in the evaluation of the present invention was the one set by arranging the following exhaust gas purification catalyst apparatus in a flow passage of exhaust gas discharged from an engine mounted onto a practical vehicle, and referring to the maximum value of concentration of $NH_3$ slipping from backward thereof. Measurement condition of exhaust gas, used as a reference, is also described as "Measurement condition of engine exhaust gas".

Concentration of $NH_3$ slipped from the backward stage of the SCR under the following "Measurement condition of engine exhaust gas" showed the maximum value in a space velocity of about 100, 000 h$^{-1}$, and was about 900 ppm, however, in the evaluation of the present invention, concentration of $NH_3$ in model gas used was set about two times thereof, to significantly express effect of the catalyst apparatus of the present invention.

<Measurement conditions of engine exhaust gas>

* An engine used: 3L diesel engine
* A catalyst layout: DOC+CSF+ (spraying of an aqueous solution of urea) +SCR
* driving mode: EU mode
* Concentration of sprayed urea (in terms of ammonia): $NH_3/NO_x$ ratio=1.0
* The DOC used:

[Base material: γ-alumina, Pt supporting amount: 1.5 g/L, Pd supporting amount: 0.5 g/L, honeycomb type: flow-through-type, honeycomb size: φ 14.4 cm (5.66 inch)×15.2 cm (6 inch), cell density of the honey comb: 46.5 cell/cm$^2$ (300 cell/inch), thickness of the cell wall: 0.13 mm (5 mil)]

* The CSF used (catalyzed DPF):

[Base material: γ-alumina, Pt supporting amount: 1 g/L, honeycomb type: wall-flow-type, honeycomb size: φ 14.4 cm (5.66 inch) ×15.2 cm (6 inch), cell density of the honeycomb: 46.5 cell/cm$^2$ (300 cell/inch), thickness of the cell wall: 0.3 mm (12 mil)]

* The SCR catalyst used:

[Fe-β zeolite supporting amount: 180 g/L, honeycomb type: wall-flow-type, honeycomb size: φ 19 cm (7.5 inch) ×15.2 cm (6 inch), cell density of the honeycomb: 62 cell/cm$^2$ (400 cell/inch), thickness of the cell wall: 0.15 mm (6 mil)]

* Concentration of an aqueous solution of urea: 31.8 to 33.3% by weight
* Urea sprayed amount:

As for decision of $NO_x$ amount, change of $NO_x$ amount discharged from an engine was ascertained, firstly in a state that the engine was operated without spraying of the aqueous solution of urea. Amount of the aqueous solution of urea sprayed per second was set, so as to be $NH_3/NO_x$ molar ratio=1, for the $NO_x$ amount data sequentially changing.

<Measurement condition>

* Components in a model gas composition: $NH_3$: 2000 ppm, NO: 500 ppm, $O_2$: 5%, He: balance
* Catalyst size of each SROC: φ 8×4 mm, two pieces, tandem (0.2 cc ×2 pieces, total 0.4 cc)
* Gas flow rate: 300 cc/min
* SV (space velocity): 45,000 h$^{-1}$
* Range of evaluation temperature: 500°C, 400°C, 300°C

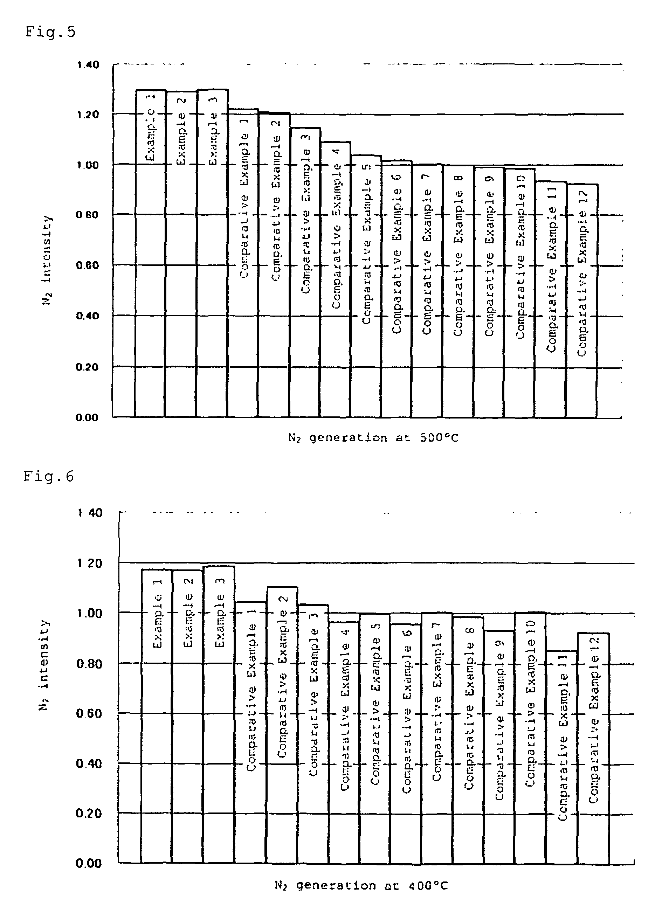

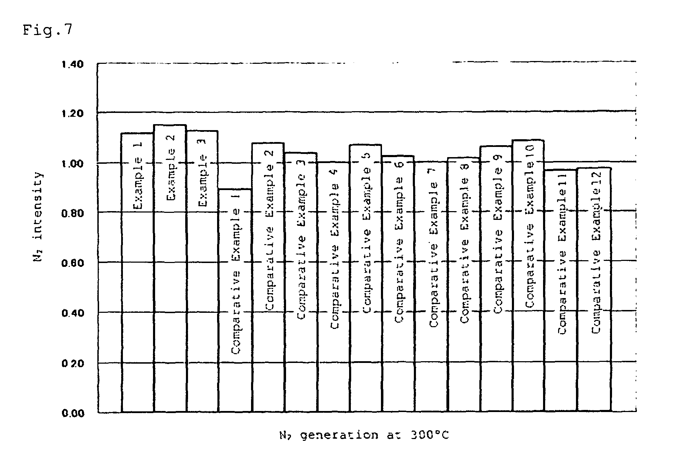

Regarding Examples and Comparative Examples, generation amount of $N_2$ after passing through of model gas at 500°C is shown in Fig. 5, generation amount of $N_2$ after passing through of model gas at 400°C is shown in Fig. 6, and generation amount of $N_2$ after passing through of model gas at 300°C is shown in Fig. 7. It should be noted that generation amount of $N_2$ gas in Figs. 5 to 7 shows as a relative value to generation amount of $N_2$ of Comparative Example 7 as 1.0.

[Evaluation]

In evaluation of Examples and Comparative Examples of the present invention, the exhaust gas purification catalyst apparatus is evaluated under severer condition, using model gas having further increased concentration of $NH_3$, based on exhaust gas after performing denitrification using urea as a reducing agent, and using the SCR catalyst, in an automotive diesel engine.
As a result, each Example of the present invention showed higher intensity of $N_2$ after passing through the SROC, from low temperature to high temperature, as compared with each Comparative Example. That is, in Examples 1 to 3, in the selective reduction-type catalyst (SROC1) at the forward stage, 90% by weight or more of the noble metal component of the lower catalyst layer (A1) is the platinum component; as well as in the selective reduction-type catalyst (SROC2) at the backward stage, the palladium component is contained in 40% by weight or more (in the present Example, 50% by weight or more) in the noble metal component of the lower catalyst layer (A2).
On the contrary, in Comparative Examples 1, 3, 4 to 6, and 8 to 12, the platinum component of the lower catalyst layer (A1) of the selective reduction-type catalyst (SROC1) at the forward stage is low, and thus desired effect is not obtained. In addition, in Comparative Examples 2 and 7, the platinum component in the noble metal component of the lower catalyst layer (A1) of the selective reduction-type catalyst (SROC1) at the forward stage contains the sufficient amount, however, the palladium component of the lower catalyst layer (A2) of the selective reduction-type catalyst (SROC2) at the backward stage is low, thus desired effect is not obtained also in this case. This result indicates that by adopting a catalyst configuration of the present invention, superior denitrification performance is exerted for exhaust gas containing $NH_3$.
According to the present invention, it is understood that it is possible to purify $NO_x$, which was not possible to purify only by the SCR catalyst, in addition to purification of $NH_3$ slipped in exhaust gas after passing through the SCR catalyst, and further enhancement of denitrification performance can be attained, in exhaust gas discharged from an automotive diesel engine.

INDUSTRIAL APPLICABILITY

The exhaust gas purification catalyst apparatus and the exhaust gas purification method using the selective reduction-type catalyst of the present invention are applicable widely to beginning from a diesel engine automobile and also to removal technology of a nitrogen oxide in exhaust gas, and also purification of slipped NH3. In addition, the present invention is applicable to the exhaust gas purification catalyst apparatus incorporated with a filter for removing the combustible particular component, and exerts superior effect.

**Claims**

1. An exhaust gas purification catalyst apparatus arranged with a spraying means of a reducing agent selected from ammonia or urea, and two selective reduction-type catalysts (SROC) in series, in a flow passage of exhaust gas of a lean burn engine, to oxidize nitrogen monoxide (NO) in exhaust gas, as well as to reduce a nitrogen oxide with the reducing agent which is sprayed in exhaust gas, to oxidize excess ammonia, **characterized in that**:

   the selective reduction-type catalyst (SROC) has a lower catalyst layer (A) and an upper catalyst layer (B) on the surface of an integral structure-type carrier (C), wherein the lower catalyst layer (A) contains the following components (i), (ii) and (iii), and on the other hand the upper catalyst layer (B) does not substantially contain the following component (i), and contains the following component (iii);
   the component (i) of the lower catalyst layer (A1) of the selective reduction-type catalyst (SROC1) at the forward stage contains a platinum component in an amount of 90% by weight or more in metal equivalent, and the component (i) of the lower catalyst layer (A2) of the selective reduction-type catalyst (SROC2) at the backward stage contains a palladium component in an amount of 40% by weight or more in metal equivalent.

   (i) a noble metal component: one or more kinds selected from the platinum component and the palladium component,
   (ii) one ormore kinds selected fromalumina, titania, silica, zirconia, tungsten oxide, a transition metal oxide, a rare earth oxide, and a complex oxide thereof,
   (iii) zeolite.

2. The exhaust gas purification catalyst apparatus according to claim 1, **characterized in that**, in the lower catalyst layer (A1) or (A2), content of the component (i) is 0.05 to 3 g/L per unit volume of the integral structure-type carrier (C).

3. The exhaust gas purification catalyst apparatus according to claim 1 or 2, **characterized in that**, in the lower catalyst layer (A1) or (A2), content of the component (ii) is 5 to 120 g/L per unit volume of the integral structure-type carrier (C).

4. The exhaust gas purification catalyst apparatus according to any one of claims 1 to 3, **characterized in that** the component (iii) in the lower catalyst layer (A) or the upper catalyst layer (B) contains β-type zeolite.

5. The exhaust gas purification catalyst apparatus according to any one of claims 1 to 4, **characterized in that** the component (iii) in the lower catalyst layer (A) or the upper catalyst layer (B) contains at least one kind of an iron component and a cerium component.

6. The exhaust gas purification catalyst apparatus according to any one of claims 1 to 5, **characterized in that**, content of the component (iii) in the lower catalyst layer (A1) is 5 to 80 g/L per unit volume of the integral structure-type carrier (C).

7. The exhaust gas purification catalyst apparatus according to any one of claims 1 to 6, **characterized in that** thickness of the lower catalyst layer (A) or the upper catalyst layer (B) is both substantially in a range of 5 to 200 μm.

8. The exhaust gas purification catalyst apparatus according to any one of claims 1 to 7, **characterized in that** the lower catalyst layer (A) is coated by the integral structure-type carrier (C), and further just thereon the upper catalyst layer (B) is coated so as to be the outermost surface layer to directly contact to the flow passage of exhaust gas.

9. The exhaust gas purification catalyst apparatus according to any one of claims 1 to 8, **characterized in that** content of the component (iii) in the upper catalyst layer (B) is 10 to 160 g/L per unit volume of the integral structure-type carrier (C).

**10.** The exhaust gas purification catalyst apparatus according to any one of claims 1 to 9, further arranged with an oxidation catalyst (DOC) having oxidation function of nitrogen monoxide and a hydrocarbon in the f lowpassage of exhaust gas, **characterized in that** a spraying means for supplying an aqueous solution of urea or an aqueous solution of ammonia is arranged at the downstream of the oxidation catalyst (DOC) and the upstream side of the selective reduction-type catalyst (SROC1).

**11.** The exhaust gas purification catalyst apparatus according to claim 10, **characterized in that** a selective reduction catalyst (SCR) substantially not having an oxidation function layer is further arranged at the upstream of the selective reduction-type catalyst (SROC1) and the downstream of the spraying means.

**12.** The exhaust gas purification catalyst apparatus according to claim 11, **characterized in that** a filter (DPF, CSF) for removing a combustible particular component is further arranged at the upstream of the selective reduction catalyst (SCR) and the downstream of the oxidation catalyst (DOC).

**13.** A method for exhaust gas purification, **characterized in that** a nitrogen oxide in exhaust gas is reduced and purified by making pass through exhaust gas discharged from a lean burn engine to the oxidation catalyst (DOC), converting nitrogen monoxide in exhaust gas to nitrogen dioxide, then spraying supplying an aqueous solution of urea or an ammonia component, and making pass through the selective reduction-type catalyst (SROC1, SROC2), with using the exhaust gas purification catalyst apparatus according to claim 10.

**14.** A method for exhaust gas purification, **characterized in that** excess ammonia in exhaust gas is oxidized and purified, by making pass through exhaust gas discharged from a lean burn engine to the oxidation catalyst (DOC), converting nitrogen monoxide in exhaust gas to nitrogen dioxide, then spraying supplying an aqueous solution of urea or an ammonia component, and making pass through the selective reduction catalyst (SCR) to reduce a nitrogen oxide in exhaust gas, and further, by making pass through the selective reduction-type catalyst (SROC1, SROC2), with using the exhaust gas purification catalyst apparatus according to claim 11.

**15.** A method for exhaust gas purification, **characterized in that** excess ammonia in exhaust gas is oxidized and purified, by making pass through exhaust gas discharged from a lean burn engine to the oxidation catalyst (DOC), converting nitrogen monoxide in exhaust gas to nitrogen dioxide, removing the combustible particular component using a filter (DPF, CSF), then spraying supplying an aqueous solution of urea or an ammonia component, and making pass through the selective reduction catalyst (SCR) to reduce a nitrogen oxide in exhaust gas, and further, by making pass through the selective reduction-type catalyst (SROC1, SROC2), with using the exhaust gas purification catalyst apparatus according to claim 12.

Fig.1

Reducing agent spraying site

SROC1

SROC2

Fig.2

Fig.3

Fig.4

Fig.5

N₂ generation at 500°C

Fig.6

N₂ generation at 400°C

Fig.7

N₂ generation at 300°C

## INTERNATIONAL SEARCH REPORT

| | International application No. |
|---|---|
| | PCT/JP2011/061256 |

A.  CLASSIFICATION OF SUBJECT MATTER
*B01D53/94*(2006.01)i, *B01J29/76*(2006.01)i, *F01N3/08*(2006.01)i, *F01N3/10*
(2006.01)i, *F01N3/28*(2006.01)i

According to International Patent Classification (IPC) or to both national classification and IPC

B.  FIELDS SEARCHED

Minimum documentation searched (classification system followed by classification symbols)
B01D53/94, B01J29/76, F01N3/08, F01N3/10, F01N3/28

Documentation searched other than minimum documentation to the extent that such documents are included in the fields searched
Jitsuyo Shinan Koho          1922–1996     Jitsuyo Shinan Toroku Koho   1996–2011
Kokai Jitsuyo Shinan Koho    1971–2011     Toroku Jitsuyo Shinan Koho   1994–2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2008-279334 A  (N.E. Chemcat Corp.),<br>20 November 2008 (20.11.2008),<br>entire text; all drawings<br>& US 2008/0286184 A1    & US 2010/0196221 A1<br>& EP 1992409 A1 | 1-15 |
| A | JP 2009-538724 A  (Umicore AG. & Co. KG.),<br>12 November 2009 (12.11.2009),<br>entire text; all drawings<br>& WO 2007/137675 A1     & CA 2652837 A1<br>& CN 101454065 A | 1-15 |
| A | JP 2009-221913 A  (Honda Motor Co., Ltd.),<br>01 October 2009 (01.10.2009),<br>entire text; all drawings<br>(Family: none) | 1-15 |

| ☒  Further documents are listed in the continuation of Box C. | ☐  See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>04 August, 2011 (04.08.11) | Date of mailing of the international search report<br>30 August, 2011 (30.08.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/061256

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2006-326437 A  (Varution Tekunnyirurinen Tsuttsuki Musukesukusu), 07 December 2006 (07.12.2006), entire text (Family: none) | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004524962 A
- JP 10005591 A
- JP 2005238195 A
- JP 2002502927 A
- JP 3012249 B
- JP 2008279334 A
- JP 2006021141 A
- JP 2005502451 A
- JP 9053442 A

**Non-patent literature cited in the description**

- *Catalysis Today,* 2006, vol. 114, 3-12